# EUROPÄISCHE PATENTSCHRIFT

(11) **EP 0 635 196 B1**
(45) Veröffentlichungstag und Bekanntmachung des Hinweises auf die Patenterteilung: **21.01.1998**
(21) Anmeldenummer: 94107812.3
(22) Anmeldetag: 20.05.1994
(51) Int. Cl.: A01C 17/00

(54) **Schleuderstreuer**
Broadcaster
Epandeur centrifuge

(30) Priorität: 28.08.1993 DE 4328991; 21.07.1993 DE 4324390
(43) Veröffentlichungstag der Anmeldung: 25.01.1995
(73) Patentinhaber: RAUCH LANDMASCHINENFABRIK GMBH, D-76547 Sinzheim (DE)
(72) Erfinder: Rauch, Norbert, D-76547 Sinzheim (DE); Schickinger, Harald, D-76547 Sinzheim (DE); Tonn, Walter, D-76532 Baden-Baden (DE); Doll, Franz, D-76547 Sinzheim (DE); Juhl, Ludwig, F-67480 Roeschwoog (FR); Walter, Georg, D-76547 Sinzheim (DE)
(74) Vertreter: Lichti, Heiner, Dipl.-Ing.

(56) Entgegenhaltungen:
- EP-A- 0 281 886
- EP-A- 0 385 091
- EP-A- 0 585 637
- DE-A- 4 100 774
- FR-A- 2 450 551

## Beschreibung

Die Erfindung betrifft einen Schleuderstreuer für rieselfähiges Streugut mit den Merkmalen des Oberbegriffs der unabhängigen Ansprüche 1 bis 3.

Schleuderstreuer des vorgenannten Aufbaus dienen insbesondere in der Landwirtschaft zum Verteilen von Dünger. Dabei muß der Schleuderstreuer an verschiedene Einsatzbedingungen angepaßt werden können, z.B. für das Normaldüngen, Spätdüngen, Grenzstreuen. Ferner muß die Streubreite der einzelnen Schleuderscheiben zur Einstellung verschiedener Arbeitsbreiten variabel sein.

Um diesen verschiedenen Einsatzbedingungen gerecht zu werden, sind bei bekannten Schleuderstreuern (DE 17 57 834 U, EP 281 886 A1, EP 292 650 B1) die Wurfflügel an der Schleuderscheibe in mehrfacher Hinsicht verstellbar. Sie bestehen zu diesen Zweck aus zwei Flügelteilen, von denen das innere an seinem inneren Ende auf der Scheibe schwenkbar gelagert ist, während das äußere Flügelteil an dem inneren verschiebbar geführt ist. Durch Verschwenken des inneren Flügelteils und damit des gesamten Wurfflügels kann der Anstellwinkel des Wurfflügels in der Scheibenebene vaiiert werden. Damit läßt sich der Flügel in eine vorgestellte oder zurückgestellte Position und damit der Abflugpunkt der Streugutpartikel auf der Umlaufbahn einstellen. Durch die verschiebbare Führung des äußeren Flügelteils am inneren läßt sich die Länge des Wurfflügels variieren und damit dessen äußere Kante, die zugleich die Abflugkante für die Streugutpartikel bildet, in unterschiedlichem Abstand vom Zentrum der Scheibe bzw. der Auslauföffnung einstellen und dadurch insbesondere die Arbeitsbreite variieren. Durch diese Einstellmöglichkeiten, insbesondere auch in ihrer Kombination, läßt sich der Schleuderstreuer allen Einsatzbedingungen anpassen.

Das schwenkbar gelagerte innere Flügelteil ist im Bereich seines äußeren Endes mit einem Bolzen in einem teilkreisförmigen Schlitz der Scheibe geführt. Das innere und das äußere Flügelteil sind als U-Profil ausgebildet, wobei das äußere Flügelteil das innere Flügelteil übergreift. Das U-Profil öffnet sich in Drehricltung der Schleuderscheibe. Ferner weist das äußere Flügelteil in seinem oberen U-Schenkel einen Längsschlitz auf, mittels dessen das Flügelteil an einem das innere Flügelteil nach oben überragenden und an ihm befestigten Stehbolzen geführt ist. Zum Festsetzen der Flügelteile in der eingestellten Position, die durch Markierungen indiziert sind, dienen einfache Schraubverbindungen. Es ist folglich ein Schraubwerkzeug notwendig, das der Landwirt bei der Feldarbeit stets mit führen muß, um vor Ort Änderungen in der Flügelstellung zu ermöglichen. Für jede Änderung der Winkel- und Längeneinstellung müssen beide Schraubverbindungen gelöst und anschließend wieder angezogen werden. Dies ist naturgemäß umständlich.

Ausgehend von dem eingangs genannten Schleuderstreuer liegt der Erfindung die Aufgabe zugrunde, für die Wurfflügel eine Ausbildung vorzuschlagen, die es ermöglicht, beide Einstellungen durch nur einen Handgriff vorzunehmen bzw. zu verändern.

Diese Aufgabe wird erfindungsgemäß dadurch gelöst, daß der bogenförmige Schlitz an der Scheibe und der Längsschlitz an dem äußeren Flügelteil einander kreuzend angeordnet sind, und daß ein einziges Festlegungsmittel mit einem beide Schlitze an deren Kreuzungspunkt durchgreifenden Führungsorgan vorgesehen ist.

Durch die sich kreuzenden Schlitze für die Schwenkführung des inneren Flügelteils an der Scheibe un die Linearführung des äußeren am inneren Flügelteil ist nur noch ein einziges beide Schlitze durchsetzendes Führungsorgan, z.B. ein Bolzen, notwendig und kann die Fixierung des Wurfflügels in jeder beliebigen Position durch nur ein einziges Festlegungsmittel erfolgen, das Teil des Führungsorgans ist oder an diesem angreift und den Wurfflügel an der Scheibe bzw. die beiden Teile der Wurfflügel miteinander verspannt. Es kann sich um eine Schraubverbindung, einen vorgespannten Bajonettverschluß, eine kurvengesteuerte Klemmverbindung od. dgl. handeln.

Bei einem bekannten Schleuderstreuer anderer Bauart (EP 0 017 128 B1) sind zwar sich kreuzende Führungsschlitze für die Winkelverstellung und die Verlagerung der Abflugkante des Wurfflügels bekannt, jedoch erfolgen beide Verstellungen nur am inneren Flügelteil und ist das äußere Flügelteil nur in einer Vertikalebene schwenkbar, um die ballistische Kurve der Streugutpartikel zu ändern. Zur Winkelverstellung weist das innere Flügelteil in einem der Scheibe aufliegenden Schenkel einen bogenförmigen Führungsschlitz auf. Dieser wird gekreuzt durch einen Radialschlitz an der Scheibe, in den eine Schraube am inneren Flügelteil eingreift, während am Kreuzungspunkt beider Schlitze eine weitere Schraube eingesetzt ist. Dabei bleibt offen, wie die Befestigung im einzelnen erfolgen soll, da die erwähnten Senkschrauben diese Aufgabe jedenfalls nicht erfüllen können. Unabhängig davon hat diese Lösung gegenüber dem den Oberbegriff der Ansprüche 1 bis 3 bildenden Stand der Technik folgende Nachteile: Der Winkelverstellbereich ist stark eingeengt, da der bogenförmige Schlitz kürzer sein muß als der relativ schmale Auflageschenkel des inneren Flügelteils. Durch die radiale Verschiebung des inneren Flügelteils wird zwar die Abflugkante verlagert, jedoch bleibt die Länge des Flügels gleich, so daß dessen Innenkante nach außen wandert. Da die Innenkante aber nicht über die Auslauföffnung, die vergleichsweise nahe dem Drehzentrum der Scheibe angeordnet ist, hinaus versetzt werden kann, ist auch dieser Einstellbereich begrenzt. Schließlich liegt der bogenförmige Schlitz an dem Auflageschenkel auf der Innenseite des Wurfflügels, von der das Streugut aufgenommen wird, so daß das Streugut in und an dem Schlitz unkontrolliert reflektiert und nicht ordnungsgemäß nach außen beschleunigt wird (sog. Prallverluste, die zur Verfälschung des Streubildes führen). Dieser Stand der Technik konnte zur Lösung der Aufgabe nichts beitragen.

Bei den bekannten Schleuderstreuern ist weiterhin von Nachteil, daß die Festsetzung ausschließlich kraftschlüssig erfolgt, was angesichts der hohen dynamischen Belastung der Wurfflügel aufgrund der großen Zentrifugalkraft der Schaufel selbst und der vom Streugut auf die Schaufel wirkenden Massenkräfte ein einwandfreies Anziehen der Schraubverbindung notwendig macht, andererseits aber stets die Gefahr der Verstellung während des Betriebs, ggf. sogar der Beschädigung bei schlagartigem Lösen einer der beiden Verbindungen mit sich bringt.

Der Erfindung liegt deshalb die weitere Aufgabe zugrunde, bei einer Änderung beider Einstellungen mit nur einem Handgriff die Gefahr der Änderung der Einstellung während des Betriebs zu vermeiden.

Die Aufgabe wird dadurch gelöst, daß die Scheibe mehrere auf dem gleichen Radius bezüglich des Schwenklagers und daß äußere Flügelteil mehrere in Verschieberichtung liegende Rastaufnahmen aufweisen, daß je eine Rastaufnahme am äußeren Flügelteil und an der Scheibe zur Deckung bringbar sind, un daß ein einziges in die sich deckenden Rastaufnahmen eingreifendes Rastmittel vorgesehen ist.

Durch die Ausbildung von Rastaufnahmen sowohl an der Scheibe, als auch am äußeren Flügelteil, wird in Verbindung mit dem Rastmittel in jeder Einstellung eine formschlüssige Verbindung hergestellt, die jegliche dynamische Belastung problemlos aufnimmt und insbesondere so gesichert werden kann, daß eine Veränderung der Position oder gar ein Lösen der Teile unmöglich ist. Ferner werden durch die Rastaufnahmen die möglichen Einstellungen indexiert, so daß der Wurfflügel exakt und reproduzierbar in jede Position eingestellt werden kann, was bei der bekannten stufenlosen Verstellbarkeit nicht möglich ist. Ferner ist das Einstellen bzw. Verstellen ohne Werkzeug, z.B. allein mittels eines Betätigungsorgans an dem Rastmittel möglich. Eine andere gleichwertige Lösung der vorgenannten Aufgabe besteht erfindungsgemäß darin, daß die Scheibe mehrere auf dem gleichen Radius bezüglich des Schwenklagers liegende Rastaufnahmen und das äußere Flügelteil einen sich etwa scheibenparallel erstreckenden Riegel aufweist, und daß ein einziges Betätigungsorgan in Form eines sich flügelparallel erstreckenden, an einer etwa scheibenparallelen Achse gelagerten Schwenkhebels mit mehreren in seiner Erstreckungsrichtung liegenden Rastaufnahmen für den Riegel und einem Rastmittel für die Rastaufnahme an der Scheibe vorgesehen ist.

Bei dieser Lösung liegen also sowohl die Rastaufnahmen an der Scheibe und an dem Schwenkhebel, als auch der Riegel am äußeren Flügelteil und das Rastmittel am Schwenkhebel in jeweils senkrecht zueinander stehenden Ebenen, gleichwohl kann allein durch Betätigen des Schwenkhebels die Einstellung des Wurfflügels bzw. der Flügelteile beliebig geändert und in jeder Einstellung eine formschlüssige Festlegung erreicht werden.

Die Rastaufnahmen an der Scheibe und am äußeren Flügelteil können unter sich jeweils abstandsgleich, aber auch mit variierenden Abständen angeordnet sein. Dies richtet sich nach dem Bedarf an Einstellmöglichkeiten.

Weitere Ausführungsformen sind in den Ansprüchen 5 bis 8 gekennzeichnet, wobei der die Rastaufnahmen verbindende Schlitz gemäß Anspruch 7 oder 8 eine zusätzliche Führung schafft, die das Verstellen erleichtert.

Der Riegel kann an einem ihn in die Raststellung drängenden Schwenkhebel als Betätigungsorgan angeordnet sein. Statt dessen kann er aber auch an einer vertikalen Betätigungsachse angeordnet sein. In beiden Fallen steht der Riegel vorzugsweise unter einer ihn in die Raststellung drängenden Federkraft.

In einer abgewandelten Ausführung ist der Riegel als drehbarer Bolzen ausgebildet, dessen Durchmesser wenig kleiner als derjenige der Rastaufnahmen ist und der an gegenüberliegenden Seiten zu einer der Breite des Schlitzes entsprechenden Breite abgeflacht ist. Auf diese Weise lassen sich in zwei um 90° versetzten Drehpositionen das äußere Flügelteil am inneren und dieses an der Scheibe verstellen, während in einer Zwischenposition der Bolzen mit seinen Kreisabschnitten in die kreisförmigen Erweiterungen eingreift und das innere Flügelteil an der Scheibe bzw. das äußere am inneren Flügelteil blockiert.

Eine andere Ausführung zeichnet sich dadurch aus, daß auf einem Radius bezüglich des Schwlenklagers liegenden Rastaufnahmen in der Scheibe als Schlitze ausgebildet sind, die auf Radialen bezüglich des Schwenklagers des inneren Flügelteils liegen, und die Rastaufnahmen am äußeren Flügelteil in einem scheibenparallelen Schenkel mit Abstand hintereinander angeordnete, gleichförmige Schlitze sind.

Bei dieser Ausführung werden also die Rastaufnahmen durch kurze Schlitze gebildet, die auf der Scheibe nebeneinander angeordnet sind und auf Radialen verlaufen. Mit diesen Schlitzen lassen sich konturengleiche Schlitze am äußeren Flügelteil, die in Richtung des Flügels hintereinander angeordnet sind, zur Deckung bringen, so daß der Wurfflügel wiederum durch ein einziges Rastmittel in der eingestellten Position arretierbar ist. Hierzu kann das Rastmittel eine Nase aufweisen, die in die Schlitze von äußerem Flügelteil und Scheibe annähernd spiel frei eingreift.

Gemäß einer abgewandelten Ausführungsform des Anspruchs 3 ist vorgesehen, daß als Rastaufnahmen in der Scheibe nebeneinander angeordnete Schlitze dienen, die auf Radialen bezüglich des Schwenklagers des inneren Flügelteils liegen, und daß der Schwenkhebel an seinem Ende eine in die Schlitze der Scheibe eingreifende Nase als Rastmittel und auf seiner Länge verteilt angeordnete Schlitze aufweist, mit denen er den Riegel am äußeren Flügelteil übergreift.

Bei dieser Ausführung sind für die Winkelverstellung des inneren Flügelteils und die Längenverstellung mittels des äußeren Flügelteils unterschiedliche Rastaufnahmen und für jede Verstellmöglichkeit ein Riegel bzw. eine Nase vorhanden, die gleichwohl an einem einzigen Betätigungsorgan angeordnet sind, so daß nach Einstellung des Wurfflügels in der gewünschten Position dieser durch einen einzigen Handgriff fixiert werden kann.

Die Festlegungsmittel, die Rastmittel bzw. das Betätigungsorgan der verschiedenen Ausführungsformen sind an der Rückseite des Flügels und/oder an der Unterseite der Scheibe vorgesehen, so daß sie leicht von der Seite bzw. unten zugänglich sind und keinen negativen Einfluß auf die Übergabe des Streugutes von der Auslauföffnung in den Wurfflügel bzw. den Transport des Streugutes im Wurfflügel ausüben können.

Die Einstellmöglichkeiten einerseits und die dynamischen Belastungen andererseits erfordern eine einwandfreie Führung der beiden Flügelteile aneinander. Es ist deshalb vorgesehen, daß das äußere Flügelteil an der Rückseite des inneren Flügelteils angeordnet ist und mittels eines Schlitzes an einem an der Rückseite des inneren Flügelteils abstehenden Bolzen geführt ist.

Durch diese Führung des vertikalen Schenkels des äußeren Flügelteils und dadurch, daß die vertikalen Schenkel des inneren und äußeren Flügelteils in jeder Position aneinander an liegen, werden in der ausgezogenen Position die auf das äußere Flügelteil wirkenden Kräfte aufgenommen. Am Übergang der beiden Flügelteile ist eine nur sehr schwache Stufe vorhanden, deren Höhe der Materialstärke des inneren Flügelteils entspricht. Der Abfluß des Düngers durch den Wurfflügel wird dadurch nicht behindert.

Dem gleichen Zweck der stabilen Führung dient die Maßnahme, wonach das innere Flügelteil ein Z-Profil ist, dessen der Scheibe aufliegender unterer Schenkel zu einem U-Profil ausgebildet ist, und daß das äußere Flügelteil mit seinem scheibenparallelen Schenkel in diesem U-Profil geführt ist. Ist dann ferner der scheibenparallele Schenkel des äußeren Flügelteils gleichfalls zu einem U-Profil ausgebildet, so wird dieses einwandfrei am inneren Flügelteil geführt, wobei durch die U-Profilform der scheibenparallelen Schenkel zusätzlich eine Stabilisierung und Versteifung der beiden Flügelteile erreicht wird. Ferner können auf diese Weise die gesamten Führungsmittel und Einstellmittel an der Rückseite des Flügels angeordnet sein, so daß weder den Flügel nach oben überragende konstruktive Teile, noch in Drehrichtung vor dem Flügel auf der Scheibe befindliche Teile vorhanden sind. Es wird somit auch die Bewegung der Düngerpartikel im Flügel bzw. auf der Scheibe in keiner Weise behindert oder negativ beeinflußt.

Auch das äußere Flügelteil ist vorzugsweise als Z-Profil ausgebildet und übergreift mit seinen oberen in Drehrichtung der Scheibe weisenden Schenkei den entsprechenden Schenkel des inneren Flügelteils.

Mit Vorteil verlaufen die oberen Schenkel beider Flügelteile in Drehrichtung ansteigend, wobei der Schenkel des äußeren Flügelteils schmaler ist, so daß seine vorlaufende Kante unterhalb der vorlaufenden Kante des inneren Flügelteils bleibt. Hiermit wird sichergestellt, daß beim Durchlauf des Wurfflügels durch den die Auslauföffnung verlassenen Streugutstrom nur eine einzige schmale Kante den Düngerstrom "durchschneidet" und dadurch vor allem Prallverluste vermieden werden.

Das innere und das äußere Flügelteil können am Übergang von dem vertikalen zu dem scheibenparallelen unteren Schenkel in Drehrichtung nach vorne zu einer Art Leiste ausgeformt sein, um dann, wenn das äußere Flügelteil die Peripherie der Scheibe überragt, die an den vertikalen Schenkel gedrängten Düngerpartikel nicht am Scheibenrand nach unten wegkippen können, sondern bis zum Ende des Flügels geführt werden.

Die Schleuderscheibe ist üblicherweise auf ihrer Antriebswelle mit einer ihr oberseitig aufsitzenden Verschlußnabe befestigt. Um zu vermeiden, daß zwischen Verschlußnabe und Wurfflügel Düngerpartikel hindurchtreten und dadurch nicht einwandfrei nach außen beschleunigt werden, liegt der Wurfflügel mit seinem inneren Ende der Verschlußnabe an. Um diese Anlage in jeder Einstellung zu gewährleisten, ist vorgesehen, daß das innere Flügelteil an seinem Schwenklager mittels eines Langlochs geführt ist, und daß der bogenförmige Schlitz in der Scheibe bzw. die Rastaufnahmen auf einem Radius mit einem anderen Mittelpunkt liegen derart, daß das innere Flügelteil in jeder Winkelposition des Wurfflügels gegen die Verschlußnabe gedrängt wird.

Schließlich kann der vertikale Schenkel des äußeren Flügelteils an seinem äußeren Ende nach hinten zu einer Handhabe abgebogen sein, so daß er sich mittels dieser Handhabe problemlos ausziehen, einschieben oder im Winkel verstellen läßt.

In einer weiteren Ausführung des Gegenstandes des Anspruchs 2 ist vorgesehen, daß der scheibenparallele Schenkel des inneren Flügelteils an seinem äußeren Ende eine den Rastaufnahmen am äußeren Flügelteil bzw. an der Scheibe entsprechende Ausnehmungen aufweist, die von dem Ratmittel durchgriffen ist, so daß auch das innere Flügelteil an seinem äußeren Ende mittels der Verrastung fixiert ist.

Zur Stabilisierung des gesamten Wurfflügels auf der Scheibe und zur zusätzlichen Schwenkführung des inneren Flügelteils ist vorgesehen, daß die Scheibe zusätzlich zu dem bogenförmigen Schlitz bzw. den Rastaufnahmen einen parallel hierzu weiter innen liegenden Führungsschlitz für das innere Flügelteil und dieses an seinem scheibenparallelen Schenkel ein sich in Flügelrichtung erstreckendes Langloch aufwieist, und daß ein den Führungsschlitz, das Langloch und den linearen Schlitz im äußeren Flügelteil durchgreifender Führungsbolzen vorgesehen ist, der zugleich die maximale Auszugslänge des äußeren Flügelteils begrenzt.

Der Führungsbolzen, der mittels eines Kopfs am einen Ende und einer Mutter auf einem Gewinde am anderen Ende den Flügel auch in vertikaler Richtung festlegt, dient zugleich als Anschlag für die maximale Auszugslänge des äußeren Flügelteils.

In einer besonders vorteilhalten Ausführung ist vorgesehen, daß der Führungsschlitz in dem Schwenkbereich mit stark vorgestelltem Wurfflügel einen nach innen zum Scheibenzentrum geführten Abschnitt aufweist. Die Ausbildung dient als Sicherheitmaßnahme für folgenden Fall: bei Zweischeinstreuern verläuft zwischen den beiden Scheiben die Welle für das im Behälter angeordnete Rührwerk. Es darf folglich der Wurfflügel nicht eine Länge erreichen, bei der er an der Rührwerkswelle anstößt. Andererseits ist bei maximaler Auszugslänge des äußeren Flügelteils die die Scheibe überragende Länge von der Winkelstellung des Flügels auf der Scheibe abhängig. Um bei stark zurückgestelltem Flügels eine maximale Auszugslänge nutzen zu können, die bei stark vorgestellter, also etwa radialer Position zu einem zu großen Überstand über den Scheibenrand und damit zur Kollision mit der Rührwerkswelle führen würde, ist der Führungsschlitz in dem letzteren Einstellbereich nach innen geführt, so daß der Führungsbolzen das äußere Flügelteil nach innen zieht. Obgleich in der Streutabelle für den Schleuderstreuer eine solche Kombination von maximaler Länge und stark vorgestelltem Flügel nicht vorgesehen ist, wird hierdurch auch bei einer Fehlbedienung Schaden wirksam vermieden.

Bei herkömmlichen Schleuderstreuern sind die Schleuderscheiben tellerförmig ausgebildet, bilden also eine flache Kegelfläche. Da die scheibenparallelen Schenkel der Flügel eben sind, liegen sie der Kegelfläche nicht satt an. Die Situation verschlechtert sich noch, je stärker die Position des Flügels von einer Radialen der Scheibe abweicht. Durch die zweiteilige Ausbildung des Flügels kommt es zwangsläufig zu Verspannungen. Diese Nachteile werden erfindungsgemäß dadurch behoben, daß die Schleuderscheibe zumindest im Bereich des Wurfflügels und dessen Verstellbereichs eine eingeformte, ebene Auflagefläche für den Wurfflügels aufweist, die einen im wesentlichen trapezförmigen Umriß aufweist.

Dem Wurfflügel bietet sich also in jeder Position eine ebene Auflagefläche, so daß einerseits das Verstellen problemlos möglich ist, anderseits Streugut nicht unter den Wurfflügels gelangen kann. Auch Verspannungen, Überbeanspruchungen und Beschädigung an den für die Verstellung notwendigen Funktionsteilen werden vermieden.

In weiterhin bevorzugter Ausführung ist vorgesehen, daß der nach vorne weisende obere Schenkel des inneren Flügelteils an seiner vorlaufenden Kante ein Sägezahnprofil aufweist, wobei mit Vorteil jeder Zahn des Sägezahnprofils eine etwa senkrecht zur Längserstreckung des Wurfflügels verlaufende Flanke und eine von innen nach außen in Drehrichtung der Scheibe angestellte Flanke aufweist.

Während bei herkömmlichen Wurfflügeln dessen vorlaufende Kante in den die Auslauföffnung verlassenden Düngerstrom über dessen gesamte Breite eintritt und den Strom "durchschneidet", wodurch es zu Staueffekten und Prallverlusten kommt, wirkt die Sägezahn-Profilierung der Kante zu einem in Drehrichtung allmählichen Eintauchen und wird der Düngerstrahl zusammengehalten, so daß die Prallverluste erheblich reduziert sind.

Weitere Einzelheiten und Vorteile der Erfindung ergeben sich aus der folgenden Beschreibung einiger bevorzugter Ausführungsformen sowie anhand der Zeichnung. In der Zeichnung zeigen:
- Figur 1 :: eine schematische Ansicht eines Zweischeibenstreuers;
- Figur 2 :: eine schematische Draufsicht auf den Schleuderstreuer gemäß Figur 1 ohne den Vorratsbehälter;
- Figur 3 :: eine Seitenansicht einer Schleuderscheibe mit einer ersten Ausführungsform der Wurfflügel;
- Figur 4 :: eine Draufsicht auf die Ausführungsform gemäß Figur 3;
- Figur 5 :: einen Schnitt V-V gemäß Figur 3;
- Figur 6 :: eine vergrößerte Draufsicht auf einen der beiden Wurfflügel der Schleuderscheibe gemäß Figur 3 und 4;
- Figur 7 :: eine Detailansicht des äußeren Flügelteils des Wurfflügels gemäß Figur 6;
- Figur 8 :: eine Teilansicht der Schleuderscheibe in der Ausführung gemäß Figur 3 bis 6;
- Figur 9, 10:: Seitenansicht und Draufsicht eines weiteren Ausführungsbeispiels des Wurfflügels;
- Figur 11,12:: eine dritte Ausführungsform in Seitenansicht und Draufsicht;
- Figur 13,14:: eine vierte Ausführungsform in Seitenansicht und Draufsicht;
- Figur 15,16:: eine fünfte Ausführungsform in Seitenansicht und Draufsicht;
- Figur 17 :: eine vergrößerte Detailansicht der Ausführungsform gemäß 15 und 16;
- Figur 18 :: eine Seitenansicht einer weiteren Ausführungsform des Wurfflügels;
- Figur 19 :: eine schematische Draufsicht auf die Schleuderscheibe mit dem inneren Flügelteil;
- Figur 20 :: einen Wurfflügel im Schnitt;
- Figur 21 :: eine Seitenansicht eines weiteren Ausführungsbeispiels und
- Figur 22 :: eine Ausführungsform mit einem Sägezahnprofil am Wurfflügel
- Figur 23 :: eine der Fig. 22 entsprechende, jedoch abgewandelten Ausführungsform und
- Figur 24 :: eine Sprengzeichnung der Ausführungsform nach Fig. 23

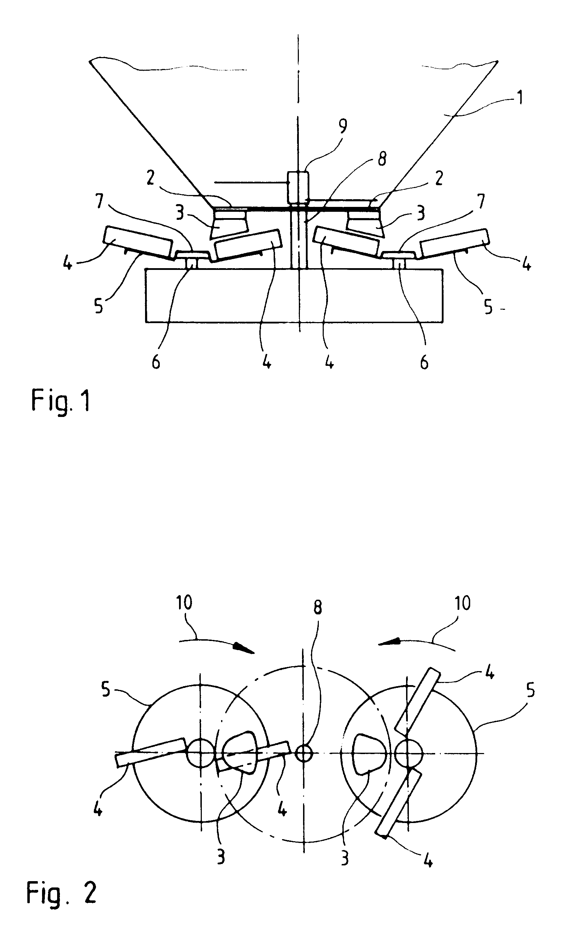

Der Schleuderstreuer gemäß Figur 1, der beispielsweise vom Dreipunktgestänge eines Schleppers aufgenommen wird, weist einen das Streugut aufnehmenden Behälter 1 auf. Der Behälter weist zwei Auslauföffnungen 2 mit je einem daran anschließenden Auslaufschacht 3 auf, unterhalb dessen mit geringem Abstand die Wurfflügel 4 je einer Schleuderscheibe 5 umlaufen. Die Schleuderscheiben 5 sitzen auf Antriebswellen 6, an denen sie mittels Verschlußnaben 7 befestigt sind. Die Antriebswellen 6 werden von der Zapfwelle des Schleppers über ein Getriebe angetrieben, dessen Gehäuse in Fig. 1 schematisch angedeutet ist. Das Getriebe weist eine weitere Welle 8 für ein im Behälter 1 umlaufendes Rührwerk 9 auf. Die beiden Schleuderscheiben 5 sind so montiert, daß die Wurfflügel 4 um 90° zueinander versetzt sind, wie dies Figur 2 zeigt. Im übrigen drehen die Schleuderscheiben 5 im Gegenuhrzeigersinn, wie mit den Richtungspfeilen 10 in Figur 2 angedeutet ist.

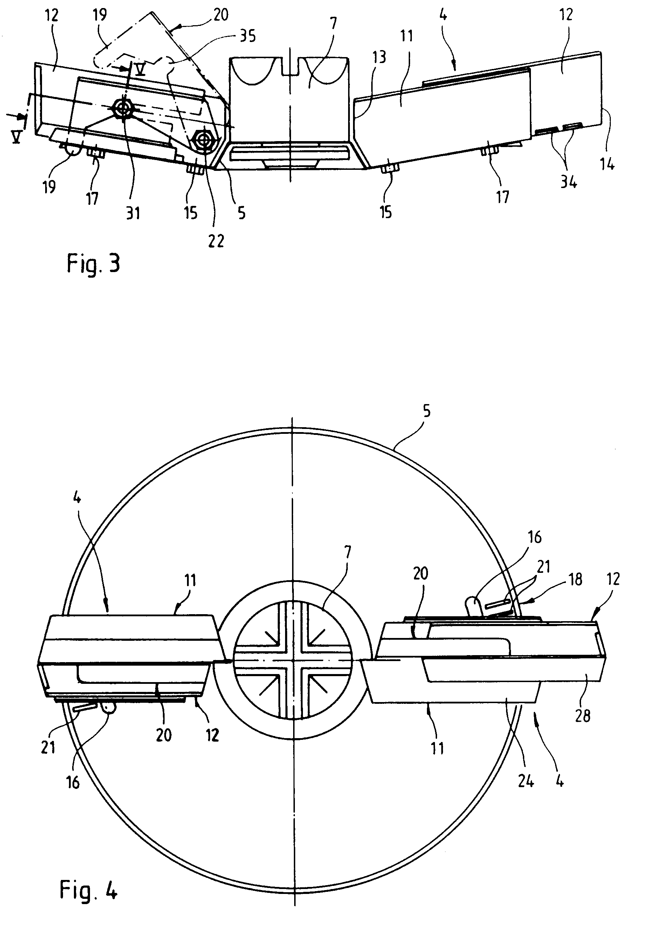

Die Wurfflügel 4 bestehen in allen Ausführungsformen aus einem inneren Flügelteil 11 und einem äußeren Flügelteil 12 (Figur 3), wobei das innere Flügelteil 11 an der Scheibe festgelegt ist, während das äußere Flügelteil 12 zur Veränderung der Flügellänge verschiebbar ist. Das innere Flügelteil 11 schließt mit seiner innen liegenden Kante 13 an der Verschlußnabe 7 an, während die äußere Kante des Wurfflügels 4, nämlich die Außenkante 14 des äußeren Flügelteils 12 die Abflugkante für den Dünger bildet.

Das innere Flügelteil 11 ist nahe seiner inneren Kante 13 an einer Achse 15 schwenkbar gelagert, so daß der Anstellwinkel des Wurfflügels 4 in der Scheibenebene einstellbar ist. Zu diesem Zweck weist die Schleuderscheibe 5 in radialem Abstand von der Schwenkachse 15 einen bogenförmigen, nämlich teilkreisförmigen Schlitz 16 (Figur 4) auf, in welchem ein Führungsorgan 17 (Figur 3) an dem inneren Flügelteil 11 geführt ist, der bei dem Ausführungsbeispiel nach Fig. 3 bis 8 als Bolzen ausgebildet ist.

Für den Anstellwinkel des Wurfflügels 4 sind verschiedene Indexpositionen vorgesehen. Zu diesem Zweck sind an der Schleuderscheibe 5 Rastaufnahmen 18 vorgesehen, in die ein Rastmittel 19 in Form einer Nase an einem Betätigungsorgan 20 (Figur 3) formschlüssig eingreift. Bei dem Ausführungsbeispiel gemäß Figur 3 bis 6 sind die Rastaufnahmen 18 als nebeneinander angeordnete Schlitze 21 ausgebildet, die auf Radien mit der Schwenkachse 15 als Mittelpunkt liegen. Das Betätigungsorgan 20 ist als Schwenkhebel ausgebildet, der an einer horizontalen Achse 22, die am inneren Flügelteil 11 angebracht ist, gelagert ist, und aus dar in Figur 3 strichpunktiert gezeigten entriegelten Stellung in die mit ausgezoganen Linien gezeigte Riegelstellung schwenkbar ist, in der die Nase 19 in einen der Schlitze 21 eingreift.

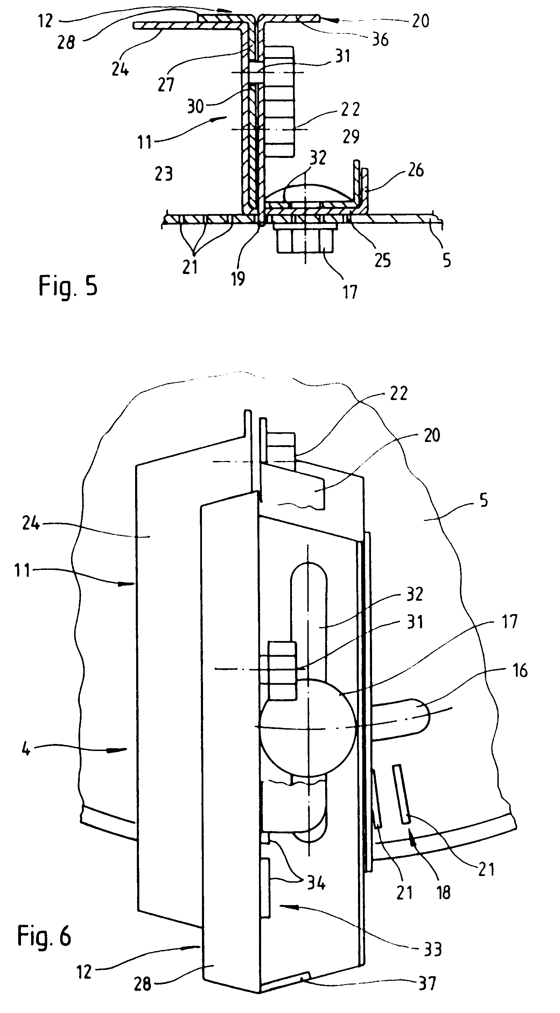

Das äußere Flügelteil 12 ist am inneren Flügelteil 11 linear verschieblich geführt, wie aus Figur 5 näher ersichtlich ist. Das innere Flügelteil 11 ist als Z-Profil ausgebildet, weist also einen etwa vertikalen Steg 23, einen in Drehrichtung der Scheibe abgewinkelten oberen Schenkel 24 und einen nach hinten abgebogenen unteren Schenkel 25 auf, der durch einen weiteren nach oben gebogenen Schenkel 26 zu einem nach oben offenen U-Profil ausgebildet ist. Der vertikale Schenkel 23 und die Oberseite der Schleuderscheibe 5 sowie der obere Schenkel 24 dienen zur Führung des Düngers bei seiner Beschleunigung nach außen. Das äußere Flügelteil 12 ist gleichfalls als Z-Profil ausgebildet, besteht also aus einem vertikalen Steg 27, einem in Drehrichtung weisenden oberan Schenkel 28 und einem unteren Schenkel 29, dar wiederum zu einem nach oben offenan U-Profil ausgeformt ist. Das äußere Flügelteil 12 weist in seinem vertikalen Schenkel 27 einen scheibenparallel verlaufenden Schlitz 30 auf, mittels dessen das äußere Flügelteil 12 an einem am vertikalen Schenkel 23 das inneren Flügelteils 11 angeschweißten Bolzen 31 geführt ist. Ferner weist das äußere Flügelteil an seinem unteran Schenkel 29 einen weiteren scheibenparallel verlaufenden Schlitz 32 auf der an dem in dem Schlitz 16 gleitenden Führungsorgan 17 geführt ist. Das äußere Flügelteil 12 weist ferner an seinem unteren Schenkel 29, und zwar unmittelbar am Übergang zu dem vertikalen Schenkel 27, mehrere in Auszugsrichtung das Flügelteils hintereinander angeordnete Rastaufnahman 33 auf, die wieder- um als Schlitze 34 ausgebildet sind. Die Schlitze 34 lassen sich je nach Anstellwinkel das Wurfflügels 4 mit dem entsprechenden Schlitz 21 in dar Scheibe 5 ausfluchtan, so daß die Nase 19 an dem Betätigungsorgan 20 gleichzeitig in einen der Schlitze 34 und 21 eingreift und somit zugleich den Wurfflügel 4 hinsichtlich seiner Drehwinkellage und hinsichtlich seiner Länge fixiert. Das Betätigungsorgan 20 bzw. der es bildende Hebel weist, wie Figur 3 zeigt, eine Aussparung 35, mittels der es den Führungsbolzen 31 für das äußere Flügelteil 12 in der Riegelstellung übergreift, und einen nach hinten abgebogenen oberen Schenkel 36 auf, der zum Entriegeln untergriffen und angehoben wird. Ferner ist zum Verschieben des äußeren Flügelteils 12 und Verschwenken des gesamten Wurfflügels der vertikale Schenkel 27 dieses Flügelteils an seinem äußeren Ende zu einer Griffplatte 37 entgegen der Drehrichtung der Scheibe 5 nach hinten abgebogen.

Anhand dar Fig. 6 sei noch eine besonders einfache, im einzelnen nicht dargestelle Ausführungsform beschrieben, wie sie auch Gegenstand des Anspruchs 1 ist. Bei dieser sind lediglich der bogenförmige Schlitz 16 in der Scheibe 6 und dar linearen Schlitz 32 im äußeren Flügelteil vorhanden, die sich, wie Fig. 6 zeigt, einander kreuzen. Bei dieser Ausführungsform fehlen die Rastaufnahmen 18 und 34 und das Rastmittel 19 und ist das die Schlitze 16 und 32 durchgreifende Führungsorgan 17 als Festlegungsmittel ausgebildet, mit dessen Hilfe das äußere und innere Flügelteil in jeder beliebigen Flügelposition mit der Scheibe 6 verspannt wird. Hierbei ergibt sich allerdings eine nur kraftschlüssige Verspannung.

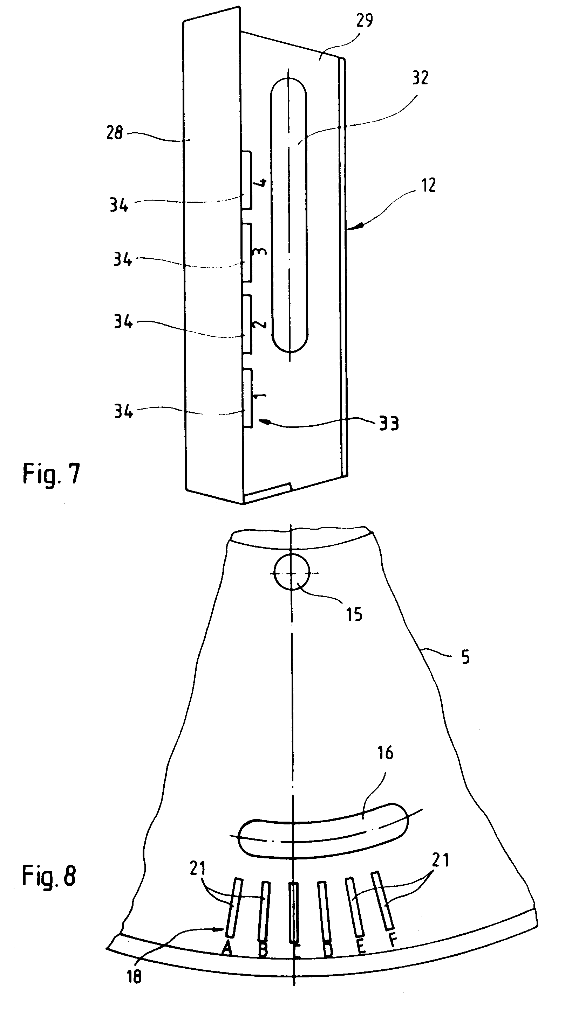

In Figur 7 ist nur das äußere Flügelteil 12 in Draufsicht gezeigt. Es sind insgesamt vier Schlitze 34 im unteren Schenkel 29 des Flügelteils 12 erkennbar, so daß der Wurfflügel in vier verschiedenen Längen und somit für vier unterschiedliche Arbeitsbreitan einstellbar ist. Die entsprechenden Indexpositionen können, wie in Figur 7 angedeutet, durch Zahlen markiert sein. In Figur 8 ist ein Ausschnitt der Schleuderscheibe 5 mit den Schlitzen 21 gezeigt, welche unterschiedliche Anstellwinkel des Wurfflügels in der Scheibenebene repräsentieren. Diese unterschiedlichen Anstellwinkel können, wie in Figur 8 angedeutet, mit Großbuchstaben markiert sein.

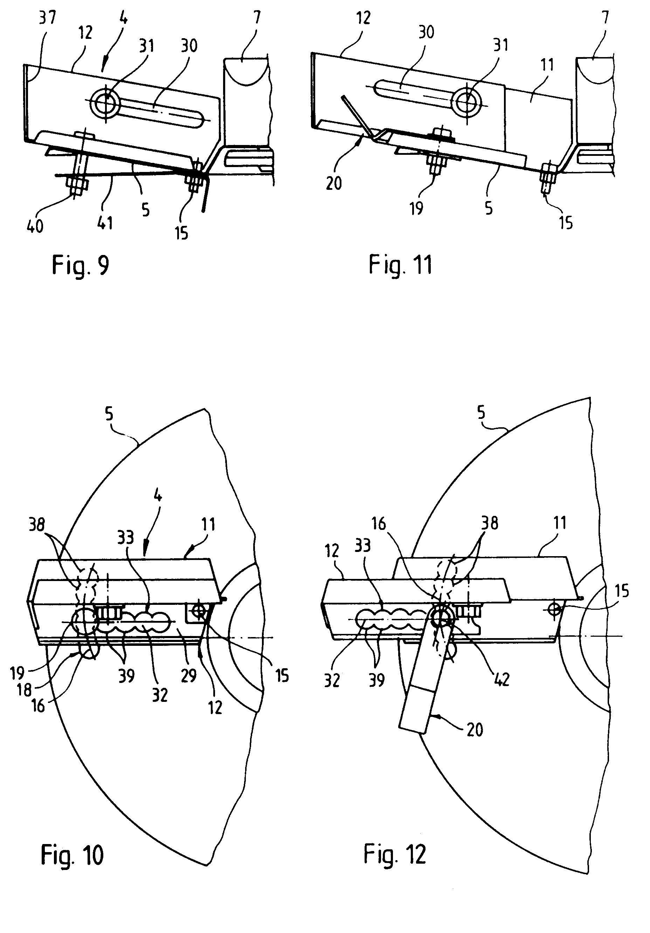

Bei dem Ausführungsbeispiel gemäß Figur 9 und 10 sind die Rastaufnahmen 33 am äußeren Flügelteil jeweils als lochförmige Erweiterungen 38 bzw. 39 an dem Führungsschlitz 16 in der Schleuderscheibe 5 bzw. an dem Führungsschlitz 32 in dem unteren Schenkel 29 des äußeren Wurfflügels 12 ausgebildet. Die lochförmigen Erweiterungen 38, 39 der Schlitze 16 bzw. 32 lassen sich wiederum in mehreren Indexpositionen ausfluchtan, so daß sowohl der Anstellwinkel des Wurfflügels 4, als auch seine Länge mit einem einzigen Rastmittel eingestellt werden kann. Bei diesem Ausführungsbeispiel weist das Rastmittal 19 die Form eines Bolzens auf, der einen dem Flügel oberseitig aufliegenden Anschlagkopf und einen lochförmigen die Erweiterungen 38 bzw. 39 durchgreifenden Zapfen 40 aufweist, der unter Wirkung einer ihn in die Raststellung ziehenden Feder 41 steht. Durch Untergreifen der Schleuderscheibe 5 und Druck auf den Zapfen 40 bzw. die Feder 41 kann der Bolzen angehoben und der Wurfflügel 4 oder nur das äußere Flügelteil 12 verstellt werden. Stattdessen kann der Bolzen auch durch Zug am Anschlagkopf angehoben werden.

Bei dem Ausführungsbeispiel gemäß Figur 11,12 sind die Rastaufnahmen in gleicher Weise ausgebildet wie beim Ausführungsbeispiel gemäß Figur 9 und 10. Es lassen sich also auch hier wieder die lochförmigen Erweiterungen 38, 39 der Schlitze 16, 32 zur Deckung bringen. Bei diesem Ausführungsbeispiel ist das Betätigungsorgan 20 um eine Achse 42 schwenkbar. Es weist in der Schwankachse 42 ein Rastmittel in Form eines Bolzens auf, der an gegenüberliegenden Seiten bis auf eine Breite abgeflacht ist, die der Breite der beiden Schlitze 16, 32 an der engsten Stelle entspricht, so daß in zwei um 90° versetzten Drehlagen der Wurfflügel 4 verschwenkt bzw. das äußere Flügelteil 12 verschoben werden kann, während in einer um 45° versetzten Stellung die gegenüberliegenden Teilkreisflächen das Bolzens sowohl in die Erweiterung 38 des Schlitzes 16, als auch in die Erweiterung 39 des Schlitzes 32 eingreifen und den Wurfflügel in der eingestellten Position verriegeln.

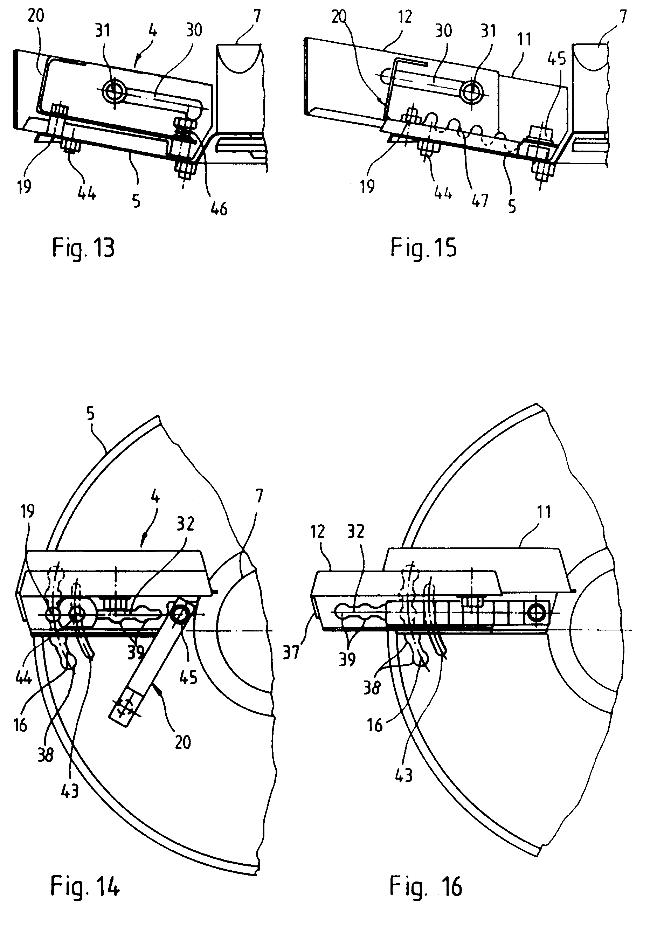

Das Ausführungsbeispiel gemäß Figur 13 und 14 unterscheidat sich von den vorangehend beschriebenen Ausführungsbeispielen im wesentlichen nur durch folgende Merkmale: Neben dem Führungsschlitz 16 mit den Erweiterungen 38 weist die Schleuderscheibe 5 einen weiteren teilkreisförmigen Führungsschlitz 43 mit gleichem Mittelpunkt auf, in den ein Führungsbolzen 44 eingreift. Diese beiden Teile übernehmen also die eigentliche Schwenkführung des Flügels 4. Als Betätigungsorgan 20 dient ein nach oben abgebogenes Flachband, das an einem Zapfen 45 unter Wirkung einer Schraubenfeder 46 in die Riegelstellung nach unten gedrängt wird. Im Bereich seines äußeren Endes weist das Betätigungsorgan 20 das Rastmittel 19 in Form eines Bolzens auf.

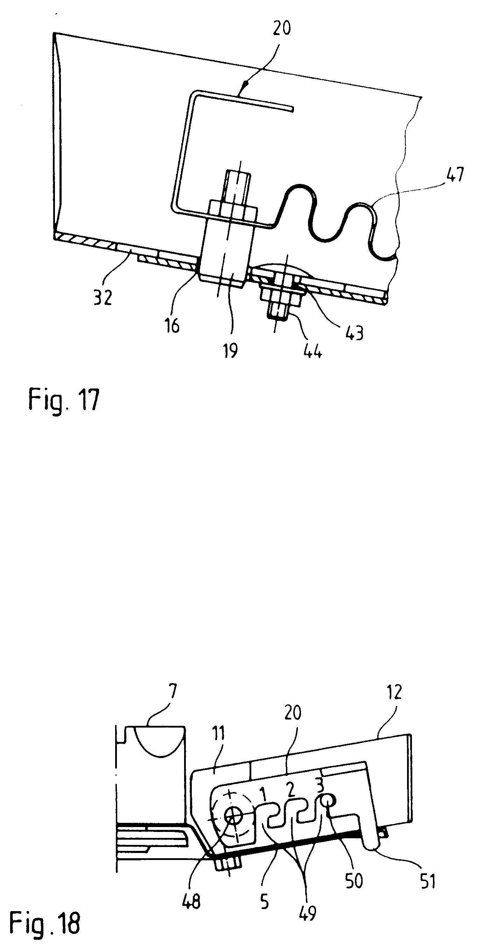

Die Ausführungsform gemäß Figur 15 und 16 unterscheidet sich von der zuvor beschriebenen Ausführungsform lediglich durch die Ausführung des Betätigungsorgans, das in seinem scheibenparallelen Abschnitt als Wellband 47 mit eigenem Federvermögen ausgebildet ist. Sowohl das Flachband des Betätigungsorgans 20 gemäß Figur 13 und 14, wie auch das Wellband 47 des Betätigungsorgans gemäß Fig. 15 und 16, liegen in der Verriegelungsstellung in dem rückwärtigen U-Profil dar beiden Flügelteile 11 und 12. Gleiches gilt auch für das Betätigungsorgan bei dem Ausführungsbeispiel nach Figur 11 und 12. Figur 17 zeigt das bolzenförmigen Rastmittel 19 der Ausführungsform gemäß Figur 15 und 16 und den Führungsbolzen 44 in vergrößerter Darstellung.

Bei dem Ausführungsbeispiel gemäß Figur 18 sind an dem Betatigungsorgan 20, das an dem inneren Flügelteil 11 an einer Achse 48 schwenkbar gelagert ist, Rastaufnahmen in Form von abgewinkelten Schlitzen 49 ausgebildet, während an dem äußeren Flügelteil 12 ein Riegel 50 angebracht ist, so daß das äußere Flügelteil 12 in verschiedenen Auszugslängen verriegelt werden kann. Ferner weist das Betätigungsorgan 20 als Rastmittel eine Nase 51 auf, die in radiale Schlitze der Scheibe 6, wie sie bei der Ausführungsform gemäß Figur 3 bis 8 vorgesehen sind, eingreift.

Mit Bezug auf Figur 3 ist erläutert worden, daß die innere Kante 13 des inneren Flügelteils 11 der Verschlußnabe 7 anliegt, um zu verhindern, daß dort Dünger hindurchtritt und nicht ordnungsgemäß durch den Wurfflügel 4 nach außen beschleunigt wird. Um diese Anlage in jeder Winkelposition zu gewährleisten, greift die Schwenkachse 15 des Wurfflügels 4 in ein langloch 15' des inneren Flügelteils 11 ein. Ferner ist dar Führungsschlitz 16 in der Scheibe 5 nicht auf einem Scheibenradius angeordnet, sondern weist ein exzentrisches Drehzentrum auf, so daß auch beim Rückstellen des inneren Flügelteils 11 in Verbindung mit dem Langloch 15' stets sichergestellt ist, daß die innere Kante 13 des Flügelteils 11 der Verschlußnabe 7 anliegt.

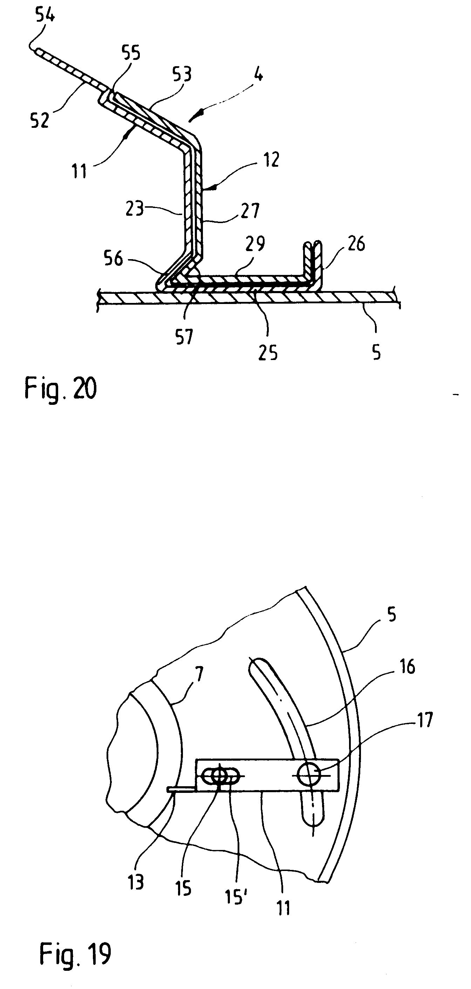

Um den Dünger beim Durchlauf der Flügel durch den die Auslauföffnung verlassenden Düngerstrahl einwandfrei "einzufangen", verläuft der obere Schenkel 52 des inneren Flügelteils 11, wie Figur 20 zeigt, nach oben ansteigend. Gleiches gilt für den oberen Schenkel 53 des äußeren Flügelteils 12, dar mit seiner Längskante 55 jedoch unterhalb der Längskante 54 das inneren Flügelteils liegt, so daß nur diese Kante den Düngerstrom durchquert. Zusätzlich kann der obere Schenkel 53 des äußeren Flügelteils 12 in einer Vertiefung des oberen Schenkels 52 des inneren Flügelteils 11 liegen.

Der Dünger wird durch die Zentrifugalbeschleunigung jeweils an die innere Seite dar vertikalen Schenkel 23, 27 der beiden Flügelteile gedrängt. Um den Dünger bis zur äußeren Kante 14 das äußeren Flügelteils 12 zu führen, sind beide Flügelteile im Bereich das Übergangs der vertikalen Schenkel 23, 27 in die horizontalen Schenkel 25, 29 zu einer Leiste 56 bzw. 57 nach vorne ausgeformt, so daß der Dünger auch bei großer Flügellänge bis zur Abflugkante geführt ist und nicht an der Peripherie der Scheibe 5 nach unten wegkippen kann.

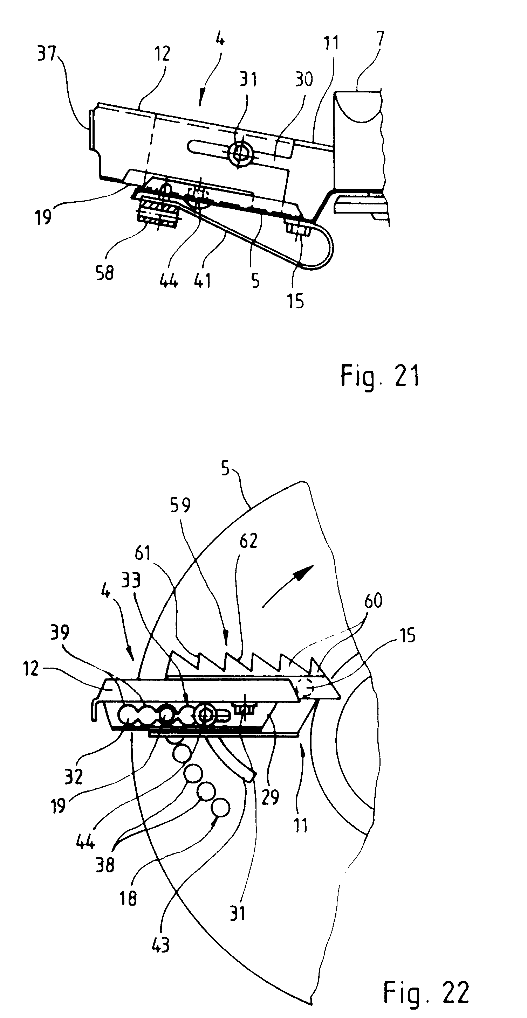

Bei dem Ausführungsbeispiel nach Fig. 21 greift das Rastmittel 19 in Form eines Bolzens wiederum von unten in die Rastaufnahmen der Scheibe 5 und des äußeren Flügelteils 12 ein. Der Bolzen sitzt an einer das Betätigungsorgan bildenden, bügelartigan Feder 41, an deren der Peripherie der Scheibe 5 nahen Ende eine Hülse 58 zum Einstecken eines stab- oder stiftförmigen Werkzeugs befestigt ist, so daß einerseits der Benutzer nicht unter die Scheibe 5 greifen muß, andererseits die Federkraft der Feder 41 beim Entriegeln problemlos überwunden werden kann.

Bei dem Ausführungsbeispiel gemäß Fig. 22 sind die Rastaufnahmen als Löcher 38 ausgebildet und nicht durch einen Schlitz verbunden. Ferner weist das innere Flügelteil 11 an seiner in Drehrichtung vorlaufenden Kante ein Sägezahnprofil 59 aus mehreren Zähnen 60 auf. Jeder Zahn 60 weist eine Flanke 61 auf, die etwa senkrecht zur Längserstreckung des Wurfflügels 4 also etwa in Drehrichtung verläuft, während die andere Flanke 62 nach außen in Drehrichtung angestellt ist. Die vorlaufende Kante tritt somit nicht schlagartig auf einer großen Länge in den die Austrittsöffnung bzw. den Auslaufschacht verlassenden Düngerstrahl ein. Ferner verhindern die Flanken 62, daß die Partikel aus dem Düngerstrahl nach außen reflektiert werden, sondern sorgen dafür, daß die Partikel innen gehalten werden und in den Wurfflügel gelangen, um erst von diesem nach außen beschleunigt zu werden.

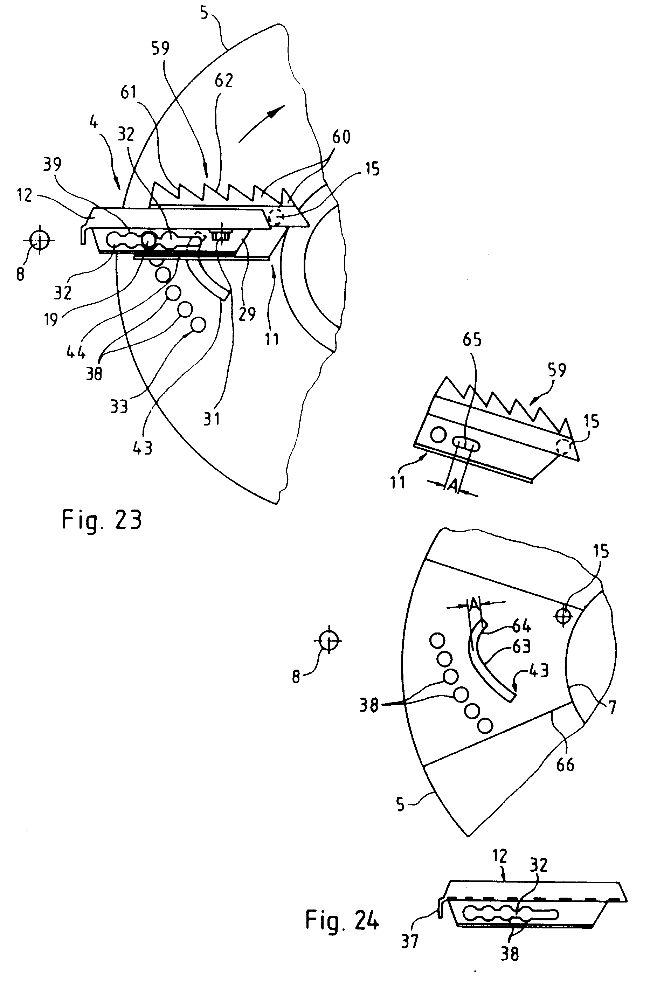

In Fig. 23 und 24 ist die zwischen den beiden Schleuderscheiben 5 (s. Fig. 1 und 2) befindliche Rührwerkswelle 8 gezeigt. In jeder Winkelposition des Wurfflügels 4 muß sichergestellt sein, daß dieser auch bei größter Auszugslänge des äußeren Flügelteils 12 nicht mit der Rührwerkswelle 8 kollidiert. Bei stark zurückgestelltem Flügel 4 - wenn also der Flügel 4 in der in Fig. 23 am weitesten unten liegenden Rastaufnahme 38 verrastet ist - kann das äußere Flügelteil 12 auf maximale Länge ausgezogen sein, ohne mit der Rührwerkswelle zu kollidieren, da der Überstand über den Rand der Scheibe 5 relativ klein ist. Wird der Flügel 4 aus dieser Winkelposition in eine vorgestellte Position verschwenkt, wie sie in Fig. 23 gezeigt ist, vergrößert sich der Überstand über den Scheibenrand. Um einerseits bei zurückgestellter Position mit einer maximalen Flügellänge, also mit möglichst weit außen liegender Abflugkante arbeiten zu können, andererseits bei stark vorstelltem Flügel Kollisionen mit der Rührwerkswelle zu vermeiden, weist der Führungsschlitz 43 außer dem auf einem Radius der Schwenkachse 15 liegenden Abschnitt 63 einen nach innen geführten Abschnitt 64 auf.

Ferner weist das innere Flügelteil 11 ein Langloch 65 auf. Die Länge A des Langlochs 65 entspricht dem radialen Versatz A der Abschnitte 63, 64 des Schlitzes 43 in der Scheibe 5 (Fig. 24). Der Führungsbolzen 44 (s. Fig. 22,23), der den linearen Schlitz 32 im äußeren Flügelteil 12, das Langloch 65 im inneren Flügelteil 11 und den Führungsschlitz 43 in der Scheibe durchsetzt, wirkt als Anschlag in dem Augenblick, wo der Flügel 4 eine Winkelposition am Übergang der Abschnitte 63 und 64 des Führungsschlitzes erreicht. Der Überstand in dieser Position ist noch unkritisch. Bei weiterem Verschwenken, das im übrigen nur bei entriegeltem Rastmittel 19 möglich ist, wird das äußere Flügelteil durch den Führungsbolzen 44 automatisch nach innen gezogen.

Die Schleuderscheibe 5 ist tellerförmig ausgebildet, wie insbesondere aus Fig. 1 und 3 ersichtlich. Sie weist also die Form eines flachen Kegelstumpfs auf, der mit seiner kleineren ebenen Basisfläche auf der Welle 6 sitzt. Die scheibenparallelen Schenkel 25, 29 des inneren und äußeren Flügelteils 11,12 weisen eine endliche Breite auf, so daß sie der Kegelfäche der Scheibe 5 nicht satt anliegen können. Dies wird besonders gravierend, wenn der Flügel 4 in eine zurückgestellte Position verschwenkt wird. Durch die Zweiteiligkeit des Flügels entstehen Zwängungskräfte in den Führungen und den Verrastungen. Um dies zu vermeiden, ist die Schleuderscheibe im Schwenkbereich des Wurfflügels zu einer ebenen Auflagefläche 66 (Fig. 24) ausgeformt, die einen etwa trapezförmigen Umriß aufweist.

## Patentansprüche

1. Schleuderstreuer für rieselfähiges Streugut, bestehend aus einem Vorratsbehälter (1) mit wenigstens einer Auslauföffnung (2) einstellbaren Querschnitts und wenigstens einer Schleuderscheibe (5), die unter der Auslauföffnung umläuft und wenigstens einen zweiteiligen Wurfflügel (4) aufweist, dessen inneres Flügelteil (11) zur Einstellung des Anstellwinkels des Wurfflügels in der Scheibenebene nahe dem Zentrum der Scheibe schwenkbar gelagert und mit Abstand davon in einem bogenförmigen Schlitz (16) der Scheibe geführt ist und dessen äußeres Flügelteil (12) mittels eines Längsschlitzes (32) gegenüber dem inneren zur Einstellung der Flügellänge verschiebbar ist, wobei beide Flügelteile in der eingestellten Position festlegbar sind, dadurch gekennzeichnet, daß der bogenförmige Schlitz (16) an der Scheibe (5) und der Längsschlitz (32) an dem äußeren Flügelteil (12) einander kreuzend angeordnet sind, und daß ein einziges Festlegungsmittel mit einem beide Schlitze an deren Kreuzungspunkt durchgreifenden Führungsorgan (17) vorgesehen ist.

2. Schleuderstreuer für rieselfähiges Streugut, bestehend aus einem Vorratsbehälter mit wenigstens einer Auslauföffnung einstellbaren Querschnitts und wenigstens einer Schleuderscheibe, die unter der Auslauföffnung umläuft und wenigstens einen zweiteiligen Wurfflügel aufweist, dessen inneres Flügelteil nahe dem Zentrum der Scheibe schwenkbar gelagert und mit Abstand davon zur Einstellung des Anstellwinkels des Wurfflügels in der Scheibenebene festlegbar ist und dessen äußeres Flügelteil gegenüber dem inneren zur Einstellung der Flügellänge linear verschiebbar ist, dadurch gekennzeichnet, daß die Scheibe (5) mehrere auf dem gleichen Radius bezüglich des Schwenklagers (15) und das äußere Flügelteil (12) mehrere in Verschieberichtung liegende Rastaufnahmen (18,33) aufweisen, daß je eine Rastaufnahme (18,33) am äußeren Flügelteil (12) und eine Rastaufnahme an der Scheibe (5) zur Deckung bringbar sind, und daß ein einziges in die sich deckenden Rastaufnahmen eingreifendes Rastmittel (19) vorgesehen ist.

3. Schleuderstreuer für rieselfähiges Streugut, bestehend aus einem Vorratsbehälter mit wenigstens einer Auslauföffnung einstellbaren Querschnitts und wenigstens einer Schleuderscheibe, die unter der Auslauföffnung umläuft und wenigstens einen zweiteiligen Wurfflügel aufweist, dessen inneres Flügelteil nahe dem Zentrum der Scheibe schwenkbar gelagert und mit Abstand davon zur Einstellung des Anstellwinkels des Wurfflügels in der Scheibenebene festlegbar ist und dessen äußeres Flügelteil gegenüber dem inneren zur Einstellung der Flügellänge linear verschiebbar ist, dadurch gekennzeichnet, daß die Scheibe (5) mehrere auf dem gleichen Radius bezüglich des Schwenklagers (15) liegende Rastaufnahmen (18) und das äußere Flügelteil einen sich etwa scheibenparallel erstreckenden Riegel (50) aufweist, und daß ein einziges Betätigungsorgan (20) in Form eines sich flügelparallel erstreckenden, an einer etwa scheibenparallelen Achse ortsfest gelagerten Schwenkhebels mit mehreren in seiner Erstreckungsrichtung liegenden Rastaufnahmen (49) für den Riegel (50) und einem Rastmittel (51) für die Rastaufnahmen (33) an der Scheibe vorgesehen ist.

4. Schleuderstreuer nach Anspruch 2, dadurch gekennzeichnet, daß die Rastaufnahmen (18,33) an der Scheibe (5) und am äußeren Flügelteil (12) unter sich jeweils abstandsgleich angeordnet sind.

5. Schleuderstreuer nach Anspruch 2 oder 4, dadurch gekennzeichnet, daß die Rastaufnahmen (18, 33) an der Scheibe (5) und am äußeren Flügelteil (12) konturengleich ausgebildet sind, und daß das Rastmittel (19) einen einzigen Riegel aufweist, der in die fluchtenden Rastaufnahmen von äußerem Flügelteil und Scheibe eingreift.

6. Schleuderstreuer nach der Anspruch 4 oder 5, dadurch gekennzeichnet, daß die Rastaufnahmen (18) an der Scheibe (5) als kreisförmige Löcher (38) ausgebildet sind, und daß das äußere Flügelteil (12) in einem scheibenparallelen Schenkel (29) eine Reihe entsprechend kreisförmiger Löcher (39) aufweist.

7. Schleuderstreuer nach einem der Ansprüche 4 bis 6, dadurch gekennzeichnet, daß die kreisförmigen Löcher (38) an der Scheibe (5) als Erweiterungen des bogenförmigen Schlitzes (16) ausgebildet sind.

8. Schleuderstreuer nach einem der Ansprüche 1, 2 und 4 bis 7, dadurch gekennzeichnet, daß die kreisförmigen Löcher (39) in dem scheibenparallelen Schenkel (29) des äußeren Flügelteils (17) durch einen Schlitz (32) gleicher Breite wie die des bogenförmigen Schlitzes (16) in der Scheibe (5) miteinander verbunden sind.

9. Schleuderstreuer nach einem der Ansprüche 4 bis 8, dadurch gekennzeichnet, daß der Riegel (11) als Bolzen (40,42) ausgebildet ist, der von oben oder unten in die fluchtenden Rastaufnahmen (18,33) in der Scheibe (5) und dem äußeren Flügelteil (12) eingreift.

10. Schleuderstreuer nach einem der Ansprüche 4 bis 9, dadurch gekennzeichnet, daß das Rastmittel (19) an einem ihn in die Raststellung drängenden Schwenkhebel als Betätigungsorgan angeordnet ist.

11. Schleuderstreuer nach einem der Ansprüche 4 bis 9, dadurch gekennzeichnet, daß das Rastmittel (19) Teil eines im wesentlichen vertikal verschieblichen Zapfens (40) ist.

12. Schleuderstreuer nach einem der Ansprüche 4 bis 11, dadurch gekennzeichnet, daß das Rastmittel (19) unter einer es in die Raststellung drängenden Federkraft (41,46,47) steht.

13. Schleuderstreuer nach einem der Ansprüche 4 bis 12, dadurch gekennzeichnet, daß das Rastmittel (19) als drehbarer Bolzen (42) ausgebildet ist, dessen Durchmesser wenig kleiner als derjenige der Rastaufnahmen (38, 39) ist und der an gegenüberliegenden Seiten zu einer der Breite des Schlitzes (16,32) entsprechenden Breite abgeflacht ist.

14. Schleuderstreuer nach Anspruch 2, dadurch gekennzeichnet, daß die auf einem Radius bezüglich des Schwenklagers (15) liegenden Rastaufnahmen (18) in der Scheibe (5) als Schlitze (21) ausgebildet sind, die auf Radialen bezüglich des Schwenklagers (15) des inneren Flügelteils (11) liegen, und daß die Rastaufnahmen (33) am äußeren Flügelteil (12) in einem scheibenparallelen Schenkel (29) mit Abstand hintereinander angeordnete, gleichförmige Schlitze (34) sind.

15. Schleuderstreuer nach Anspruch 2 und 14, dadurch gekennzeichnet, daß das Rastmittel (19) eine Nase aufweist, die in die Schlitze (21,34) in dem äußeren Flügelteil (12) und in der Scheibe (5) annähernd spielfrei eingreift.

16. Schleuderstreuer nach Anspruch 3, dadurch gekennzeichnet, daß als Rastaufnahmen (18) in der Scheibe (5) nebeneinander angeordnete Schlitze (21) dienen, die auf Radialen bezüglich des Schwenklagers (15) des inneren Flügelteils (11) liegen, und daß der Schwenkhebel (20) an seinem Ende ein in die Schlitze (21) der Scheibe (5) eingreifende Nase (51) als Rastmittel und auf seiner Länge verteilt angeordnete Schlitze (49) als Rastaufnahmen aufweist, mit denen er den Riegel (50) am äußeren Flügelteil (12) übergreift.

17. Schleuderstreuer nach Anspruch 16, dadurch gekennzeichnet, daß die Schlitze (49) am Schwenkhebel (20) abgewinkelt sind.

18. Schleuderstreuer nach einem der Ansprüche 1 bis 16, dadurch gekennzeichnet, daß die Festlegungsmittel, die Rastmittel (19) und das Betätigungsorgan (20) an der Rückseite des Wurfflügels (4) angeordnet ist.

19. Schleuderstreuer nach einem der Ansprüche 4 bis 16, dadurch gekennzeichnet, daß das Rastmittel (19) mit seiner Handhabe an der Unterseite der Scheibe (5) angeordnet ist.

20. Schleuderstreuer nach einem der Ansprüche 1 bis 19, dadurch gekennzeichnet, daß das Betätigungsorgan (20, 41) als Federhebel ausgebildet ist.

21. Schleuderstreuer nach einem der Ansprüche 1 bis 20, dadurch gekennzeichnet, daß das Betätigungsorgan (20,41) nahe der Schwenkachse des inneren Flügelteils (11) an der Ober- oder Unterseite der Scheibe (5) befestigt ist.

22. Schleuderstreuer nach einem der Ansprüche 1 bis 21, dadurch gekennzeichnet, daß das Betätigungsorgan (20,41) an seinem freien Ende eine Hülse (58) zum Einstecken eines stabförmigen Hilfswerkzeugs aufweist.

23. Schleuderstreuer nach einem der Ansprüche 1 bis 22, dadurch gekennzeichnet, daß das äußere Flügelteil (12) an der Rückseite des inneren Flügelteils (11) angeordnet ist und mittels eines Schlitzes (30) an einem an der Rückseite des inneren Flügelteils (11) abstehenden Bolzen (31) geführt ist.

24. Schleuderstreuer nach einem der Ansprüche 1 bis 23, dadurch gekennzeichnet, daß das innere Flügelteil (11) ein Z-Profil ist, dessen der Scheibe (5) aufliegender unterer Schenkel (25) zu einem U-Profil ausgebildet ist, und daß das äußere Flügelteil (12) mit seinem scheibenparallelen Schenkel (29) in diesem U-Profil geführt ist.

25. Schleuderstreuer nach Anspruch 24, dadurch gekennzeichnet, daß der scheibenparallele Schenkel (29) des äußeren Flügelteils (12) gleichfalls zu einem U-Profil ausgebildet ist.

26. Schleuderstreuer nach einem der Ansprüche 1 bis 25, dadurch gekennzeichnet, daß der lineare Schlitz (32) bzw. die Rastaufnahmen (33) in dem scheibenparallelen Schenkel (29) des U-Profils des äußeren Flügelteils (12) angeordnet sind.

27. Schleuderstreuer nach einem der Ansprüche 1 bis 26, dadurch gekennzeichnet, daß das äußere Flügelteil (12) als Z-Profil ausgebildet ist und mit seinem oberen in Drehrichtung der Scheibe (5) weisenden Schenkel (28) den entsprechenden Schenkel (24) des inneren Flügelteils (11) teilweise übergreift.

28. Schleuderstreuer nach einem der Ansprüche 1 bis 27, dadurch gekennzeichnet, daß der obere Schenkel (52, 53) beider Flügelteile (11,12) in Drehrichtung ansteigend verläuft.

29. Schleuderstreuer nach einem der Ansprüche 1 bis 28, dadurch gekennzeichnet, daß das innere und das äußere Flügelteil (11,12) am Übergang zu dem scheibenparallelen Schenkel (25,29) in Drehrichtung nach vorne ausgeformt sind.

30. Schleuderstreuer nach einem der Ansprüche 1 bis 29, wobei die Schleuderscheibe mit einer ihr oberseitig aufsitzenden Verschlußnabe an ihrer Antriebswelle befestigt ist und die Wurfflügel mit ihrem inneren Ende der Verschlußnabe anliegen, dadurch gekennzeichnet, daß das innere Flügelteil (11) an seinem Schwenklager (15) mittels eines Langlochs (15') geführt ist, und daß der bogenförmige Schlitz (16) bzw. die Rastaufnahme in der Scheibe (5) auf einem Radius mit einem von dem Schwenklager (15) verschiedenen Mittelpunkt liegen derart, daß das innere Flügelteil (11) in jeder Winkelposition des Wurfflügels (4) gegen die Verschlußnabe (7) gedrängt wird.

31. Schleuderstreuer nach einem der Ansprüche 1 bis 30, dadurch gekennzeichnet, daß der vertikale Schenkel (27) des äußeren Flügelteils (12) an seinem äußeren Ende nach hinten zu einer Handhabe (37) abgebogen ist.

32. Schleuderstreuer nach einem der Ansprüche 2 bis 31, dadurch gekennzeichnet, daß der scheibenparallele Schenkel (25) des inneren Flügelteils (11) an seinem äußeren Ende eine den Rastaufnahmen (33,18) am äußeren Flügelteil (12) bzw. an der Scheibe (6) entsprechende Ausnehmung aufweist, die von dem Rastmittel (19) durchgriffen ist.

33. Schleuderstreuer nach einem der Ansprüche 1 bis 32, dadurch gekennzeichnet, daß die Scheibe (6) zusätzlich zu dem bogenförmigen Schlitz (16) bzw. den Rastaufnahmen (18) einen parallel hierzu weiter innen liegenden Führungsschlitz (43) für das innere Flügelteil (11) und dieses an seinem scheibenparallelen Schenkel (25) ein sich in Flügelrichtung erstreckendes Langloch (65) aufweist, und daß ein den Führungsschlitz (43), das Langloch (65) und den linearen Schlitz (32) im äußeren Flügelteil (12) durchgreifender Führungsbolzen (44) vorgesehen ist, der zugleich die maximale Auszugslänge des äußeren Flügeteils (12) begrenzt.

34. Schleuderstreuer nach einem der Ansprüche 1 bis 33, dadurch gekennzeichnet, daß der Führungsschlitz (43) in dem Schwenkbereich mit stark vorgestelltem Wurfflügel (4) einen nach innen zum Scheibenzentrum geführten Abschnitt (63) aufweist.

35. Schleuderstreuer für rieselfähiges Streugut bestehend aus einem Vorratsbehälter mit wenigstens einer Auslauföffnung einstellbaren Querschnitts und wenigstens einer unter dieser umlaufenden, tellerförmigen Schleuderscheibe, die eine ebene Basisfläche zum Befestigen auf der Antriebswelle aufweist, sich in Form eines flachen Kegels nach oben erstreckt und an ihrer Oberseite wenigstens einen Wurfflügel aufweist, der an der Schleuderscheibe winkelverstellbar angeordnet und/oder längenveränderlich ausgebildet ist nach einem der Ansprüche 1 bis 34, dadurch gekennzeichnet, daß die Schleuderscheibe (5) zumindest im Bereich des Wurfflügels (4) und dessen Verstellbereichs eine eingeformte, ebene Auflagefläche (66) für den Wurfflügel (4) aufweist.

36. Schleuderstreuer nach Anspruch 35, dadurch gekennzeichnet, daß die ebene Auflagefläche (66) einen im wesentlichen trapezförmigen Umriß aufweist.

37. Schleuderstreuer nach einem der Ansprüche 1 bis 36, dadurch gekennzeichnet, daß der nach vorne weisende obere Schenkel (24) des inneren Flügelteils (11) an seiner vorlaufenden Kante ein Sägezahnprofil (59) aufweist.

38. Schleuderstreuer nach Anspruch 17, dadurch gekennzeichnet, daß jeder Zahn (60) des Sägezahnprofils (59) eine etwa senkrecht zur Längserstreckung des Wurfflügels (4) verlaufende Flanke (61) und eine von innen nach außen in Drehrichtung der Scheibe (5) angestellte Flanke (62) aufweist.

## Claims

1. Centrifugal spreader for free-flowing spreading material, comprising a storage container (1) having at least one discharge opening (2) with an adjustable cross-section and at least one centrifugal disk (5), which revolves below the discharge opening and has at least one two-part spreading blade (4), whose inner blade part (11) is pivotably mounted close to the centre of the disk for adjusting the setting angle of the spreading blade in the disk plane and is guided spaced therefrom in an arcuate slot (16) of the disk and whose outer blade part (12) is displaceable by means of an elongated slot (32) with respect to the inner blade part for adjusting the blade length, both blade parts being fixable in the set position, characterized in that the arcuate slot (16) on the disk (5) and the elongated slot (32) on the outer blade part (12) are arranged so as to cross one another and that a single fixing means is provided with a guide member (17) passing through both slots at their crossing point.

2. Centrifugal spreader for free-flowing spreading material, comprising a storage container with at least one discharge opening with an adjustable cross-section and at least one centrifugal disk, which revolves below the ischarge opening and has at least one two-part spreading blade, whose inner blade part is pivotably mounted close to the centre of the disk and is fixable spaced therefrom for adjusting the setting angle of the spreading blade in the disk plane and whose outer blade part is linearly displaceable with respect to the inner blade part for adjusting the blade length, characterized in that the disk (5) has several locking receptacles (18, 33) located on the same radius with respect to the pivot bearing (15) and the outer blade part (12) has several such receptacles located in the displacement direction, that in each case one locking receptacle (18, 33) on the outer blade part (12) and one locking receptacle on the disk (5) can be made to coincide and that a single locking means (19) engaging in the coinciding locking receptacles is provided.

3. Centrifugal spreader for free-flowing spreading material, comprising a storage container with at least one discharge opening with an adjustable cross-section and at least one centrifugal disk, which revolves below the discharge opening and has at least one two-part spreading blade, whose inner blade part is pivotably mounted close to the centre of the disk and is fixable spaced therefrom for adjusting the setting angle of the spreading blade in the disk plane and whose outer blade part is linearly displaceable with respect to the inner blade part for adjusting the blade length, characterized in that the disk (5) has several locking receptacles (18) located on the same radius with respect to the pivot bearing (15) and the outer blade part has a roughly disk-parallel extending bolt (50) and that a single operating member (20) in the form of a blade-parallel extending pivoted lever mounted in fixed manner on a roughly disk-parallel axis and having several locking receptacles (49) located in its extension direction for the bolt (50) and a locking means (51) for the locking receptacles (33) on the disk is provided.

4. Centrifugal spreader according to claim 2, characterized in that the locking receptacles (18, 33) on the disk (5) and on the outer blade part (12) are in each case arranged equidistantly.

5. Centrifugal spreader according to claim 2 or 4, characterized in that the locking receptacles (18, 33) on the disk and on the outer blade part (12) have an equicontour construction and that the locking means (19) have a single bolt, which engages in the aligned locking receptacles of the outer blade part and the disk.

6. Centrifugal spreader according to claim 4 or 5, characterized in that the locking receptacles (18) on the disk (5) are constructed as circular holes (38) and that the outer blade part (12) in a disk-parallel leg (29) has a row of corresponding circular holes (39).

7. Centrifugal spreader according to one of the claims 4 to 6, characterized in that the circular holes (38) on the disk (5) are constructed as extensions of the arcuate slot (16).

8. Centrifugal spreader according to one of the claims 1, 2 and 4 to 7, characterized in that the circular holes (39) in the disk-parallel leg (29) of the outer blade part (17) are interconnected by a slot (32) having the same width as that of the arcuate slot (16) in the disk (5).

9. Centrifugal spreader according to one of the claims 4 to 8, characterized in that the bolt (11) is constructed as a plug (40, 42), which engages from above or below in the aligned locking receptacles (18, 33) in the disk (5) and the outer blade part (12).

10. Centrifugal spreader according to one of the claims 4 to 9, characterized in that the locking means (19) are located on a pivoted lever urging same into the locking position as the operating member.

11. Centrifugal spreader according to one of the claims 4 to 9, characterized in that the locking means (19) are part of a substantially vertically displaceable pin (40).

12. Centrifugal spreader according to one of the claims 4 to 11, characterized in that the locking means (19) are under a spring tension (41, 46, 47) urging same into the locking position.

13. Centrifugal spreader according to one of the claims 4 to 12, characterized in that the locking means (19) are constructed as a rotary plug (42), whose diameter is slightly smaller than that of the locking receptacles (38, 39) and which on facing sides is flattened to a width corresponding to the width of the slot (16, 32).

14. Centrifugal spreader according to claim 2, characterized in that the locking receptacles (18) in the disk (5) located on one radius with respect to the pivot bearing (15) are constructed as slots (21), which are located on radials with respect to the pivot bearing (15) of the inner blade part (11) and that the locking receptacles (33) on the outer blade part (12) in a disk-parallel leg (29) are spaced, successively arranged, uniform slots (34).

15. Centrifugal spreader according to claim 2 and 14, characterized in that the locking means (19) have a nose, which engages in approximately play-free manner in the slots (21, 34) in the outer blade part (12) and in the disk (5).

16. Centrifugal spreader according to claim 3, characterized in that the locking receptacles (18) in the disk (5) are constituted by juxtaposed slots (21) located on radials with respect to the pivot bearing (15) of the inner blade part (11) and that the pivoted lever (20) has on its end a nose (51), as locking means, engaging in the slot (21) of the disk (5) and has slots (49) as locking receptacles distributed over its length and with which it engages over the bolt (50) on the outer blade part (12).

17. Centrifugal spreader according to claim 16, characterized in that the slots (49) on the pivoted lever (20) are offset.

18. Centrifugal spreader according to one of the claims 1 to 16, characterized in that the fixing means, the locking means (19) and the operating member (20) are located on the back of the spreading blade (4).

19. Centrifugal spreader according to one of the claims 4 to 16, characterized in that the locking means (19) with the handle thereof are located on the underside of the disk (5).

20. Centrifugal spreader according to one of the claims 1 to 19, characterized in that the operating member (20, 41) is constructed as a spring lever.

21. Centrifugal spreader according to one of the claims 1 to 20, characterized in that the operating member (20, 41) is fixed to the top or bottom of the disk (5) close to the pivoting axis of the inner blade part (11).

22. Centrifugal spreader according to one of the claims 1 to 21, characterized in that the operating member (20, 41) has on its free end a sleeve (58) for inserting a rod-shaped auxiliary tool.

23. Centrifugal spreader according to one of the claims 1 to 22, characterized in that the outer blade part (12) is placed on the back of the inner blade part (11) and is guided by means of a slot (30) on a peg (31) projecting from the back of the inner blade part (11).

24. Centrifugal spreader according to one of the claims 1 to 23, character-ized in that the inner blade part (11) is a Z-profile, whose lower leg (25) engaging on the disk (5) is constructed as a U-profile and that the outer blade part (12) with its disk-parallel leg (29) is guided in said U-profile.

25. Centrifugal spreader according to claim 24, characterized in that the disk-parallel leg (29) of the outer blade part (12) is also constructed as a U-profile.

26. Centrifugal spreader according to one of the claims 1 to 25, characterized in that the linear slot (32) or the locking receptacles (33) are located in the disk-parallel leg (29) of the U-profile of the outer blade part (12).

27. Centrifugal spreader according to one of the claims 1 to 26, characterized in that the outer blade part (12) is constructed as a Z-profile and with its upper leg (28) pointing in the rotation direction of the disk (5) partly engages over the corresponding leg (24) of the inner blade part (11).

28. Centrifugal spreader according to one of the claims 1 to 27, characterized in that the upper leg (52, 53) of both blade parts (11, 12) rises in the rotation direction.

29. Centrifugal spreader according to one of the claims 1 to 28, characterized in that the inner and outer blade parts (11, 12) at the transition to the disk-parallel leg (25, 29) is forwardly shaped in the rotation direction.

30. Centrifugal spreader according to one of the claims 1 to 29, in which the centrifugal disk is fixed to the driving shaft with a locking boss resting on its top and the spreading blades engage with their inner end on said locking boss, characterized in that the inner blade part (11) is guided on its pivot bearing (15) by means of an elongated hole (15') and that the arcuate slot (16) or locking receptacle in the disk (5) are located on a radius with a centre differing from the pivot bearing (15) in such a way that the inner blade part (11) in each angular position of the spreading blade (4) is urged against the locking boss (7).

31. Centrifugal spreader according to one of the claims 1 to 30, characterized in that the vertical leg (27) of the outer blade part (12) is bent rearwards at its outer end to a handle (37).

32. Centrifugal spreader according to one of the claims 2 to 31, characterized in that the disk-parallel leg (25) of the inner blade part (11) has on its outer end a recess corresponding to the locking receptacles (33, 18) on the outer blade part (12) or on the disk (6), the locking means (19) passing through said recess.

33. Centrifugal spreader according to one of the claims 1 to 32, characterized in that, in addition to the arcuate slot (16) or the locking receptacles (18), the disk (6) has a further inwardly located guide slot (43), parallel thereto, for the inner blade part (11) and said slot is provided on its disk-parallel leg (25) with an elongated hole (65) extending in the blade direction and that there is a guide bolt (44) passing through the guide slot (43), the elongated hole (65) and the linear slot (32) in the outer blade part (12) and said guide bolt simultaneously limits the maximum extraction length of the outer blade part (12).

34. Centrifugal spreader according to one of the claims 1 to 33, characterized in that the guide slot (43) has in the pivoting area with a significantly advanced spreading blade (4) a portion (63) guided inwards towards the disk centre.

35. Centrifugal spreader for free-flowing spreading material, comprising a storage container with at least one discharge opening having an adjustable cross-section and at least one plate-like centrifugal disk revolving beneath the same and which has a planar base surface for fixing to the driving shaft, extends upwards in the form of a flat cone and has on its top at least one spreading blade, which is placed in angularly adjustable manner on the centrifugal disk and/or is constructed in length-variable manner, according to one of the claims 1 to 34, characterized in that, at least in the area of the spreading blade (4) and its adjustment zone, the centrifugal disk (5) has a shaped in, planar bearing surface (66) for the spreading blade (4).

36. Centrifugal spreader according to claim 35, characterized in that the planar bearing surface (66) has a substantially trapezoidal outline.

37. Centrifugal spreader according to one of the claims 1 to 36, characterized in that the forwardly directed, upper leg (24) of the inner blade part (11) has a sawtooth profile (59) on its leading edge.

38. Centrifugal spreader according to claim 17, characterized in that each tooth (60) of the sawtooth profile (59) has a flank (61) running approximately perpendicular to the longitudinal extension of the spreading blade (4) and a flank (62) set from the inside to the outside in the rotation direction of the disk (5).

## Revendications

1. Epandeur centrifuge pour un matériau susceptible de s'écouler, constitué d'un réservoir (1) comportant au moins une sortie d'écoulement (2) de section transversale réglable et au moins un disque d'épandage rotatif sous la sortie d'écoulement et présentant au moins une aile de projection (4) en deux parties, dont la partie intérieure (11) est montée pivotante (orientable) dans le plan du disque près du centre du disque pour le réglage de l'angle d'incidence de l'aile de projection, et guidée à distance du centre du disque dans une lente en forme d'arc, et dont la partie extérieure (12) est déplaçable au moyen d'une lente longitudinale (32) par rapport à la partie intérieure pour le réglage de la longueur de l'aile, les deux parties de l'aile pouvant être immobilisées dans la position réglée, caractérisé en ce que la fente en forme d'arc (16) et la lente longitudinale (32) sont disposées de manière à se croiser respectivement sur le disque (5) et sur la partie extérieure (12) de l'aile, et en ce qu'il est prévu un seul moyen de fixation comportant un organe de guidage traversant les deux lentes à leur point d'intersection.

2. Epandeur centrifuge pour un matériau susceptible de s'écouler, constitué d'un réservoir comportant au moins une sortie d'écoulement de section transversale réglable et au moins un disque d'épandage rotatif sous la sortie d'écoulement et présentant au moins une aile de projection en deux parties, dont la partie intérieure est montée orientable près du centre du disque et pouvant être fixé à distance de celui-ci, dans le plan du disque, pour le réglage de l'angle d'incidence de l'aile de projection, et dont la partie extérieure de l'aile est déplaçable linéairement par rapport à la partie intérieure pour régler la longueur de l'aile, caractérisé en ce que le disque (5) et la partie extérieure (12) de l'aile présentent plusieurs logements d'encastrement (18,33) situés les premiers sur le même rayon par rapport au palier pivotant (15) et les deuxièmes dans la direction de déplacement, en ce que l'on peut faire coïncider à chaque fois un logement (18,33) de la partie extérieure (12) de l'aile avec un logement du disque, et en ce qu'il est prévu un seul moyen d'encliquetage pénétrant dans les logements coïncidents.

3. Epandeur centrifuge pour un matériau susceptible de s'écouler, constitué d'un réservoir comportant au moins une sortie d'écoulement de section transversale réglable et au moins un disque d'épandage tournant sous la sortie d'écoulement et présentant au moins une aile de projection en deux parties, dont la partie intérieure est montée orientable près du centre du disque et pouvant être fixé à distance de celui-ci, dans le plan du disque, pour le réglage de l'angle d'incidence de l'aile de projection, et dont la partie extérieure de l'aile est déplaçable linéairement par rapport à la partie intérieure pour régler la longueur de l'aile, caractérisé en ce que le disque (5) présente plusieurs logements d'encliquetage (18) situés dans un même rayon par rapport au palier de pivotement (15) et que la partie extérieure de l'aile présente un verrou (50) s'étendant à peu près parallèlement au disque, et en ce qu'il est prévu un seul organe d'actionnement (20) sous la forme d'un levier de pivotement s'étendant parallèlement à l'aile, monté fixe sur un axe approximativement parallèle au disque, comportant plusieurs logements d'encliquetage (49) situés dans sa direction d'orientation pour le verrou (50) et un moyen d'encliquetage (51) pour les logements d'encliquetage (33) du disque.

4. Epandeur centrifuge selon la revendication 2, caractérisé en ce que les logements d'encliquetage (18,33) sont disposés équidistants l'un par rapport à l'autre sur le disque (5) et sur la partie extérieure (12) de l'aile.

5. Epandeur centrifuge selon la revendication 2 ou 4, caractérisé en ce que les logements d'encliquetage (18,33) sont conformés selon des profils identiques sur le disque (5) et la partie extérieure (12) de l'aile et en ce que le moyen d'encliquetage (19) présente un seul verrou qui pénètre dans les logements d'encliquetage alignés de la partie extérieure de l'aile et du disque.

6. Epandeur centrifuge selon la revendication 4 ou 5, caractérisé en ce que les logements d'encliquetage (18) situés sur le disque (5) sont conformés en ouvertures circulaires (38) et en ce que la partie extérieure (12) présente une rangée d'ouvertures circulaires (39) correspondantes dans un retour (29) parallèle au disque.

7. Epandeur centrifuge selon l'une quelconque des revendications 4 à 6, caractérisé en ce que les ouvertures circulaires (38) sur le disque (5) sont conformées comme une suite d'élargissements de la lente en arc (16).

8. Epandeur centrifuge selon l'une quelconque des revendications 1,2 et 4 à 7, caractérisé en ce que les ouvertures circulaires (39) dans le retour (29) parallèle au disque de la partie extérieure de l'aile (12) sont reliées entre elles par une lente (32) de largeur identique à celle de la lente en arc (16) du disque (5).

9. Epandeur centrifuge selon l'une quelconque des revendications 4 à 8, caractérisé en ce que le verrou (11) est réalisé sous la forme d'un boulon (40,42) pénétrant par le haut ou par le bas dans les logements d'encliquetage (18,33) alignés du disque (5) et de la partie extérieure (12) de l'aile.

10. Epandeur centrifuge selon l'une quelconque des revendications 4 à 9, caractérisé en ce que le moyen d'encliquetage (19) est disposé en tant qu'organe d'actionnement sur un levier pivotant qui le pousse dans la position d'encliquetage.

11. Epandeur centrifuge selon l'une quelconque des revendications 4 à 9, caractérisé en ce que le moyen d'encliquetage (19) lait partie d'une broche (40) déplaçable sensiblement verticalement.

12. Epandeur centrifuge selon l'une quelconque des revendications 4 à 11, caractérisé en ce que le moyen d'encliquetage (19) est soumis à un retour élastique qui le pousse dans la position d'encliquetage.

13. Epandeur centrifuge selon l'une quelconque des revendications 4 à 12, caractérisé en ce que le moyen d'encliquetage (19) est conformé en tourillon (42) dont le diamètre est légèrement inférieur à celui des logements d'encliquetage (38,39) et qui est aplati sur ses côtés opposés pour obtenir une largeur correspondant à la largeur de la lente (16,32).

14. Epandeur centrifuge selon la revendication 2, caractérisé en ce que les logements d'encliquetage (18) situés sur un rayon par rapport au palier pivotant (15) sont conformés sur le disque (5) en lentes (21) radiales par rapport au palier pivotant (15) de la partie intérieure (11) de l'aile et en ce que les logements d'encliquetage (33) sur la partie extérieure (12) de l'aile correspondent à des lentes (34) de forme identique, alignées à distance les unes derrière les autres sur une aile (29) parallèle au disque.

15. Epandeur centrifuge selon les revendications 2 et 14, caractérisé en ce que le moyen d'encliquetage (19) présente un tenon pénétrant pratiquement sans jeu dans les lentes (21,34) de la partie extérieure (12) de l'aile et du disque (5).

16. Epandeur centrifuge selon la revendication 3, caractérisé en ce que les lentes (21) disposées adjacentes sur le disque (5) et radiales par rapport au palier pivotant (15) de la partie intérieure (11) de l'aile servent de logements d'encliquetage (18), et en ce que le levier pivotant (20) présente à son extrémité un tenon (51) pénétrant dans les lentes (21) du disque (5) servant de moyen d'encliquetage, ainsi que des lentes (49) réparties sur sa longueur servant de logements d'encliquetage par lesquels il dépasse sur le verrou (50) de la partie extérieure (12) de l'aile.

17. Epandeur centrifuge selon la revendication 16, caractérisé en ce que les lentes (49) du levier pivotant (20) sont pliées en U.

18. Epandeur centrifuge selon l'une quelconque des revendications 1 à 16, caractérisé en ce que les moyens de fixation, les moyens d'encliquetage (19) et l'organe d'actionnement (20) sont disposés sur la face arrière de l'aile de projection (4).

19. Epandeur centrifuge selon l'une quelconque des revendications 4 à 16, caractérisé en ce que le moyen d'encliquetage (19) avec sa poignée est disposé sur la face inférieure du disque (5).

20. Epandeur centrifuge selon l'une quelconque des revendications 1 à 19, caractérisé en ce que l'organe d'actionnement (20,41) est réalisé sous la forme d'un levier à ressort.

21. Epandeur centrifuge selon l'une quelconque des revendications là 20, caractérisé en ce que l'organe d'actionnement (20,41) est fixé à proximité de l'axe de pivotement de la partie intérieure (11) de l'aile sur la face supérieure ou inférieure du disque (5).

22. Epandeur centrifuge selon l'une quelconque des revendications 1 à 21, caractérisé en ce que l'organe d'actionnement (20,41) présente à son extrémité libre un douille (58) pour l'introduction d'un outil de secours en forme de barre.

23. Epandeur centrifuge selon l'une quelconque des revendications 1 à 22, caractérisé en ce que la partie extérieure (12) d'aile est disposée sur la face arrière de la partie intérieure (11) d'aile et est guidée par une lente (30) sur un bouton (31) en saillie de la face arrière de la partie intérieure (11) de l'aile.

24. Epandeur centrifuge selon l'une quelconque des revendications 1 à 23, caractérisé en ce que la partie intérieure (11) de l'aile est un profil en Z, dont le retour inférieur (25) reposant sur le disque (5) présente un profil en U et en ce que la partie extérieure (12) de l'aile est guidée par son retour (29) parallèle au disque dans ce profil en U.

25. Epandeur centrifuge selon la revendication 24, caractérisé en ce que le retour (29) parallèle au disque de la partie extérieure (12) de l'aile est également conformé en U.

26. Epandeur centrifuge selon l'une quelconque des revendications 1 à 25, caractérisé en ce que la lente rectiligne (32) et les logements d'encliquetage (33) sont ménagés dans le retour (29) parallèle au disque du profit en U de la partie extérieure (12) de l'aile.

27. Epandeur centrifuge selon l'une quelconque des revendications 1 à 26, caractérisé en ce que la partie extérieure (12) de l'aile présente un profit en Z, et recouvre partiellement par son retour (28) supérieur orienté dans le sens de rotation du disque (5) le retour (24) correspondant de la partie intérieure (11) de l'aile.

28. Epandeur centrifuge selon l'une quelconque des revendications 1 à 27, caractérisé en ce que le retour supérieur (52,53) des deux parties intérieure et extérieure (11,12) de l'aile s'étend dans la direction de rotation en montant.

29. Epandeur centrifuge selon l'une quelconque des revendications 1 à 28, caractérisé en ce que la partie intérieure et extérieure (11,12) de l'aile est déformée dans la direction de rotation au droit du retour (25,29) parallèle au disque.

30. Epandeur centrifuge selon l'une quelconque des revendications 1 à 29, dans lequel le disque d'épandage est fixé à son arbre d'entraînement par un moyeu à verrouillage placé sur sa face supérieure et les ailes de projection viennent en contact avec le moyeu à verrouillage par leur extrémité intérieure, caractérisé en ce que la partie intérieure (11) de l'aile est guidée à son palier pivotant (15) par une ouverture oblongue (15') et en ce que la lente en arc (16) et le logement d'encliquetage dans le disque (5) sont situés sur un rayon dont le centre est différent du palier pivotant (15) de sorte que la partie intérieure (11) de l'aile est poussée dans chaque position d'angle de l'aile de projection (4) contre le moyeu à verrouillage (7).

31. Epandeur centrifuge selon l'une quelconque des revendications 1 à 30, caractérisé en ce que le retour vertical (27) de la partie extérieure (12) de l'aile est courbé vers l'arrière à son extrémité extérieure pour former une poignée (37).

32. Epandeur centrifuge selon l'une quelconque des revendications 2 à 31, caractérisé en ce que le retour (25) parallèle au disque de la partie intérieure (11) de l'aile présente à son extrémité extérieure un évidement correspondant aux logements d'encliquetage (33,18) de la partie extérieure (12) de l'aile et du disque (5) traversé par le moyen d'encliquetage (19).

33. Epandeur centrifuge selon l'une quelconque des revendications 1 à 32, caractérisé en ce que le disque (5) présente en plus de la lente en arc (16) et des logements d'encliquetage (18) une lente de guidage (43) parallèle à ceux-ci et située davantage à l'intérieur pour la partie intérieure (11) de l'aile, celle-ci présentant sur son retour (25) parallèle au disque une ouverture oblongue (65) s'étendant en direction de l'aile et en ce qu'est prévu un bouton de guidage (44) traversant la lente de guidage (43), l'ouverture oblongue (65) et la lente rectiligne (32) de la partie extérieure (12) de l'aile qui limite simultanément la longueur d'allongement de la partie extérieure (12) de l'aile.

34. Epandeur centrifuge selon l'une quelconque des revendications 1 à 33, caractérisé en ce que la lente de guidage (43) présente dans la zone de pivotement, l'aile de projection (4) étant fortement sortie, une portion (63) dirigée vers l'intérieur en direction du centre du disque.

35. Epandeur centrifuge pour matériau susceptible de s'écouler comprenant un réservoir comportant au moins une sortie d'écoulement à section transversale réglable et au moins un disque d'épandage en forme d'assiette tournant en-dessous de celle-ci, présentant une embase plane pour la fixation sur l'arbre d'entraînement, s'étendant vers le haut sous la forme d'un cône plat et présentant à sa face supérieure au moins une aile de projection montée à angle réglable sur le disque d'épandage et/ou de longueur variable, selon l'une quelconque des revendications 1 à 34, caractérisé en ce que le disque d'épandage (5) présente au moins dans la zone de l'aile de projection (4) et de sa zone de réglage une surface d'appui (66) plane moulée pour l'aile de projection (4).

36. Epandeur centrifuge selon la revendication 35, caractérisé en ce que la surface d'appui plane (66) présente un contour sensiblement en forme de trapèze.

37. Epandeur centrifuge selon l'une quelconque des revendications 1 à 36, caractérisé en ce que le retour supérieur (24) orienté vers l'avant de la partie intérieure (11) de l'aile présente un bord d'attaque en profit en dents de scie (59).

38. Epandeur centrifuge selon la revendication 17, caractérisé en ce que chaque dent (60) du profit en dents de scie (59) présente un flanc (61) s'étendant sensiblement perpendiculaire à la direction longitudinale de l'aile de projection (4) et un flanc (62) s'étendant de l'intérieur vers l'extérieur de la direction de rotation du disque (5).
